# EUROPEAN PATENT APPLICATION

(11) **EP 3 335 954 A1**
(43) Date of publication of application: **20.06.2018**
(21) Application number: 16837120.1
(22) Date of filing: 17.08.2016
(51) Int. Cl.: B60W 30/16, B60W 30/02, B60W 30/12

(54) **LEANING VEHICLE**

(30) Priority: 17.08.2015 JP 2015160460; 17.08.2015 JP 2015160461; 17.08.2015 JP 2015160459
(71) Applicant: Yamaha Hatsudoki Kabushiki Kaisha, Iwata-shi, Shizuoka 438-8501 (JP)
(72) Inventor: SAKAI, Kouji, Iwata-shi Shizuoka 438-8501 (JP); KANEHARA, Masatomo, Iwata-shi Shizuoka 438-8501 (JP); YABUZAKI, Tomoya, Iwata-shi Shizuoka 438-8501 (JP); HARAZONO, Yasunobu, Iwata-shi Shizuoka 438-8501 (JP); FUJITO, Manabu, Iwata-shi Shizuoka 438-8501 (JP); FUJII, Shigeru, Iwata-shi Shizuoka 438-8501 (JP)
(74) Representative: Stöckeler, Ferdinand
(86) International application number: PCT/JP2016/073948
(87) International publication number: WO 2017/030131

(57) **Abstract**

A driving assist in conformity with the driver's feeling of a leaning vehicle is described. A sensing unit (21) of a leaning vehicle (1) is configured to sense objects in front of, behind, or both of the leaning vehicle (1). An active driving assist control unit (57) controls an active driving assist unit (23) of the leaning vehicle (1) so as to actively assist the driver of the leaning vehicle (1) in accordance with a result of sensing by the sensing unit (21) and information of a position of the leaning vehicle (1) in a lane (100) in the left-right direction of the lane (100), the information being obtained by an in-lane left-right position information acquisition unit (22).

## Description

### [Technical Field]

The present invention relates to a leaning vehicle, and particularly relates to a leaning vehicle including an active driving assist device which is configured to actively assist a driver.

### [Background Art]

Passenger vehicles are provided with various active driving assist devices which actively assist the drivers. For example, there is an active driving assist device which performs control so that the inter-vehicle distance between a preceding vehicle and the host vehicle is maintained. PTL 1, for example, proposes to apply an active driving assist device mounted on such a passenger vehicle to a leaning vehicle. The leaning vehicle is a vehicle which includes a vehicle body frame structured to lean rightward of the vehicle when turning right and lean leftward of the vehicle when turning left. In this specification, passenger vehicles are vehicles used for transporting passengers and not including leaning vehicles.

The active driving assist device described above detects the inter-vehicle distance between the host vehicle on which the device is mounted and the preceding vehicle and controls acceleration so that the inter-vehicle distance between the vehicles is maintained to be a predetermined distance. When the preceding vehicle deaccelerates, the active driving assist device deaccelerates the host vehicle to maintain the inter-vehicle distance. When the preceding vehicle accelerates, the active driving assist device accelerates the host vehicle within a running speed range to maintain the inter-vehicle distance.

### [Citation List]

### [Patent Literatures]

[PTL 1] Publication of Japanese Translation of PCT international application No. 2007-531654 (Tokuhyo 2007-531654)

### [Summary of Invention]

### [Technical Problem]

Control by such an active driving assist device is required to conform to the driver's feeling as much as possible. The control by the active driving assist device taught by PTL 1, however, may not conform to the driver's feeling in some running situations of the leaning vehicle.

An object of the present invention is to provide a leaning vehicle including an active driving assist device which is capable of actively assisting a driver of the leaning vehicle in conformity with the driver's feeling.

### [Solution to Problem and Advantageous Effects of Invention]

The inventors of the present teaching reconsidered the characteristics of leaning vehicles.

A leaning vehicle is narrow in width. The width of the leaning vehicle is equal to or shorter than the half of the width of a lane. In one lane, therefore, two leaning vehicles can stop side by side in the width direction of the lane. Furthermore, because of the narrow width, the leaning vehicle is, for example, able to selectively run on a right part, a left part, or a central part of a single lane. In other words, the leaning vehicle is able to run on a selected position in the left-right direction in a single lane. In this connection, the vehicle body frame of the leaning vehicle leans when turning left or right. When the vehicle body frame of the leaning vehicle leans, the width of the leaning vehicle increases in the left-right direction of the lane. The inventors of the present teaching noticed that, even though the vehicle width is narrow when the leaning vehicle is upright, the width preferable for running must be sufficiently long in the left-right direction of the lane in some running situations. Furthermore, the driver's environment significantly varies in accordance with the position of the leaning vehicle in the lane in the left-right direction of the lane. On this account, when control is performed without taking into account the position of the leaning vehicle in the lane in the left-right direction of the lane, the control may not conform to the driver's feeling. The inventors of the present teaching have noticed that control conforms to the driver's feeling of a leaning vehicle when the control actively assists the driver by using information regarding the position of the leaning vehicle in the lane in the left-right direction of the lane.
[1] A leaning vehicle of the present teaching includes: a vehicle body frame which leans rightward in a vehicle left-right direction when turning right and leans leftward in the vehicle left-right direction when turning left; a seat supported by the vehicle body frame; a front wheel unit which includes at least one front wheel, is supported by the vehicle body frame, and is provided at least partially forward of the seat in a vehicle front-rear direction; and a rear wheel unit which includes at least one rear wheel, is supported by the vehicle body frame, and is provided at least partially rearward of the seat in the vehicle front-rear direction.
   The leaning vehicle of the present teaching has a width variation characteristic with which, in a left-right direction of a lane in which the leaning vehicle runs, a lean state width which encompasses the leaning vehicle and the driver when the vehicle body frame leans is longer than an upright state width which encompasses the leaning vehicle and the driver when the vehicle body frame is upright. An active driving assist device which includes: an active driving assist unit capable of actively assisting the driver of the leaning vehicle having the width variation characteristic; a sensing unit configured to sense an object in front of, behind, or both in the vehicle front-rear direction of the leaning vehicle; an in-lane left-right position information acquisition unit configured to acquire information of a position of the leaning vehicle in the lance in the left-right direction of the lane; and an active driving assist control unit which is configured to control the active driving assist unit so as to actively assist the driver of the leaning vehicle with the width variation characteristic in accordance with a result of sensing by the sensing unit and the information of the position of the leaning vehicle in the lane in the left-right direction of the lane, the information of the position being obtained by the in-lane left-right position information acquisition unit.
   According to the arrangement above, the leaning vehicle includes a vehicle body frame, a seat, a front wheel unit, a rear wheel unit, and an active driving assist device. The seat, the front wheel unit, and the rear wheel unit are supported by the vehicle body frame. The front wheel unit includes at least one front wheel and is provided at least partially forward of the seat in the vehicle front-rear direction. The rear wheel unit includes at least one rear wheel and is provided at least partially rearward of the seat in the vehicle front-rear direction. The vehicle body frame leans rightward in the vehicle left-right direction when turning right and leans leftward in the vehicle left-right direction when turning left. Such a leaning vehicle is narrower in width than a passenger vehicle. The leaning vehicle is therefore able to run on a selected position in a single lane. Furthermore, the leaning vehicle has a width variation characteristic with which, in a left-right direction of a lane in which the leaning vehicle runs, a lean state width which encompasses the leaning vehicle and a driver when the vehicle body frame leans is longer than an upright state width which encompasses the leaning vehicle and the driver when with the vehicle body frame is upright. On this account, even though the upright state width is short, the width preferable for running must be sufficiently long in the left-right direction of the lane in some running situations.
   The active driving assist device includes an active driving assist unit, a sensing unit, an in-lane left-right position information acquisition unit, and an active driving assist control unit. The active driving assist unit is configured to be able to actively assist the driver of the leaning vehicle having the width variation characteristic. A sensing unit is configured to sense an object in front of, behind, or both in the vehicle front-rear direction of the leaning vehicle. The in-lane left-right position information acquisition unit is configured to obtain information of a position of the leaning vehicle in the lane in the left-right direction of the lane. The active driving assist control unit controls the active driving assist unit so as to actively assist the driver in accordance with a result of sensing by the sensing unit and information of the position of the leaning vehicle in the lane in the left-right direction of the lane, the information being obtained by the in-lane left-right position information acquisition unit. Based on the result of the sensing by the sensing unit and the information of the position of the leaning vehicle in the lane in the left-right direction of the lane, it is possible to grasp a width preferable for the leaning vehicle which runs in the lane. In this way, driving assist in conformity with the driver' feeling of the leaning vehicle with the width variation characteristic can be realized.
[2] According to another aspect of the invention, the leaning vehicle of the present teaching preferably has the following arrangement.
   The sensing unit includes a front sensing unit configured to sense an object in front of the leaning vehicle in the vehicle front-rear direction.
   The active driving assist control unit is configured to control the active driving assist unit so as to actively assist the driver of the leaning vehicle with the width variation characteristic, in accordance with the information of the position of the leaning vehicle in the lane in the left-right direction of the lane, the information of the position being acquired by the in-lane left-right position information acquisition unit, when a preceding vehicle which runs in a region forward of the leaning vehicle in the vehicle front-rear direction is detected in the lane in which the leaning vehicle runs based on a result of sensing by the front sensing unit.
   According to this arrangement, the sensing unit includes the front sensing unit configured to sense an object in front of the leaning vehicle in the vehicle front-rear direction. In the lane in which the leaning vehicle runs, a vehicle running in a region forward of the leaning vehicle in the vehicle front-rear direction is referred to as the preceding vehicle. When the preceding vehicle is detected based on a result of sensing by the front sensing unit, the active driving assist control unit controls the active driving assist unit to actively assist the driver of the leaning vehicle having the width variation characteristic, in accordance with the information of the position of the leaning vehicle in the lane in the left-right direction of the lane. In a state in which the preceding vehicle is running, driving assist in accordance with the position of the leaning vehicle in the lane in the left-right direction of the lane is possible. On this account, driving assist further in conformity with the driver' feeling of the leaning vehicle with the width variation characteristic can be realized.
[3] According to another aspect of the invention, the leaning vehicle of the present teaching preferably has the following arrangement.
   The active driving assist device includes a preceding vehicle information detection unit which is configured to detect at least one of sets of information based on a result of sensing by the front sensing unit, the sets of information being: a first inter-vehicle distance between the preceding vehicle and the leaning vehicle in the vehicle front-rear direction of the leaning vehicle or the front-rear direction of the lane; a distance between the center of the leaning vehicle and the center of the preceding vehicle in the vehicle left-right direction of the leaning vehicle or the left-right direction of the lane; width of the preceding vehicle in the vehicle left-right direction of the leaning vehicle or the left-right direction of the lane; a position of the preceding vehicle in the lane in the left-right direction of the lane; speed of the preceding vehicle in the vehicle front-rear direction of the leaning vehicle or a traveling direction of the leaning vehicle; relative speed of the preceding vehicle relative to the leaning vehicle in the vehicle front-rear direction of the leaning vehicle or the traveling direction of the leaning vehicle; acceleration of the preceding vehicle in the vehicle front-rear direction of the leaning vehicle or a traveling direction of the leaning vehicle; relative acceleration of the preceding vehicle relative to the leaning vehicle in the vehicle front-rear direction of the leaning vehicle or the traveling direction of the leaning vehicle; speed of the preceding vehicle in the vehicle left-right direction of the leaning vehicle or a direction orthogonal to the traveling direction of the leaning vehicle; relative speed of the preceding vehicle relative to the leaning vehicle in the vehicle left-right direction of the leaning vehicle or the direction orthogonal to the traveling direction of the leaning vehicle; acceleration of the preceding vehicle in the vehicle left-right direction of the leaning vehicle or the direction orthogonal to the traveling direction of the leaning vehicle; and relative acceleration of the preceding vehicle relative to the leaning vehicle in the vehicle left-right direction of the leaning vehicle or the direction orthogonal to the traveling direction of the leaning vehicle.
   The active driving assist control unit is configured to control the active driving assist unit so as to actively assist the driver of the leaning vehicle with the width variation characteristic, based on the at least one set of information detected by the preceding vehicle information detection unit and the information of the position of the leaning vehicle in the lane in the left-right direction of the lane, the information of the position being detected by the in-lane left-right position information acquisition unit.
   According to this arrangement, based on a result of sensing by the front sensing unit, the preceding vehicle information detection unit detects at least one of sets of information, the sets of information being: a first inter-vehicle distance between the preceding vehicle and the leaning vehicle in the vehicle front-rear direction of the leaning vehicle or the front-rear direction of the lane; a distance between the center of the leaning vehicle and the center of the preceding vehicle in the vehicle left-right direction of the leaning vehicle or the left-right direction of the lane; width of the preceding vehicle in the vehicle left-right direction of the leaning vehicle or the left-right direction of the lane; a position of the preceding vehicle in the lane in the left-right direction of the lane; speed of the preceding vehicle in the vehicle front-rear direction of the leaning vehicle or a traveling direction of the leaning vehicle; relative speed of the preceding vehicle relative to the leaning vehicle in the vehicle front-rear direction of the leaning vehicle or the traveling direction of the leaning vehicle acceleration of the preceding vehicle in the vehicle front-rear direction of the leaning vehicle or a traveling direction of the leaning vehicle; relative acceleration of the preceding vehicle relative to the leaning vehicle in the vehicle front-rear direction of the leaning vehicle or the traveling direction of the leaning vehicle; speed of the preceding vehicle in the vehicle left-right direction of the leaning vehicle or a direction orthogonal to the traveling direction of the leaning vehicle, or; relative speed of the preceding vehicle relative to the leaning vehicle in the vehicle left-right direction of the leaning vehicle or the direction orthogonal to the traveling direction of the leaning vehicle; acceleration of the preceding vehicle in the vehicle left-right direction of the leaning vehicle or the direction orthogonal to the traveling direction of the leaning vehicle; and relative acceleration of the preceding vehicle relative to the leaning vehicle in the vehicle left-right direction of the leaning vehicle or the direction orthogonal to the traveling direction of the leaning vehicle. The active driving assist control unit controls the active driving assist unit to actively assist the driver based on the at least one set of information detected by the preceding vehicle information detection unit and the position of the leaning vehicle in the lane in the left-right direction of the lane. The active driving assist control unit performs the driving assist control in consideration of not only the position of the leaning vehicle in the lane in the left-right direction of the lane but also the running situation of the preceding vehicle. On this account, driving assist further in conformity with the driver's feeling of the leaning vehicle with the width variation characteristic can be realized.
[4] According to another aspect of the invention, the leaning vehicle of the present teaching preferably has the following arrangement.
   The active driving assist device includes a leaning detection unit which is configured to detect at least one of sets of information, the sets of information being a tilt angle, a tilt angular speed, and a tilt angular acceleration of leaning of the vehicle body frame in the vehicle left-right direction.
   The active driving assist control unit is configured to control the active driving assist unit so as to actively assist the driver of the leaning vehicle with the width variation characteristic, based on the at least one set of information of the tilt angle, the tilt angular speed, and the tilt angular acceleration of the vehicle body frame of the leaning vehicle detected by the leaning detection unit and further based on the information of the position of the leaning vehicle in the lane in the left-right direction of the lane, the information of the position being acquired by the in-lane left-right position information acquisition unit.
   According to this arrangement, the leaning detection unit detects at least one set of information of the tilt angle, the tilt angular speed, and the tilt angular acceleration of the vehicle body frame of the leaning vehicle. A width preferable for running varies in accordance with the degree of leaning of the vehicle body frame of the leaning vehicle. The active driving assist control unit controls the active driving assist unit to actively assist the driver, based on at least one set of information of the tilt angle, the tilt angular speed, and the tilt angular acceleration of the vehicle body frame of the leaning vehicle detected by the leaning detection unit and further based on the position of the leaning vehicle in the lane in the left-right direction of the lane. On this account, driving assist further in conformity with the driver's feeling of the leaning vehicle with the width variation characteristic can be realized.
[5] According to another aspect of the invention, the leaning vehicle of the present teaching preferably has the following arrangement.
   The active driving assist device includes a speed-related information detection unit which is configured to detect at least one of sets of information, the sets of information being: speed of the leaning vehicle in the traveling direction; acceleration of the leaning vehicle in the traveling direction; speed of the leaning vehicle in the vehicle front-rear direction; acceleration of the leaning vehicle in the vehicle front-rear direction; speed of the leaning vehicle in the vehicle left-right direction; and acceleration of the leaning vehicle in the vehicle left-right direction.
   The active driving assist control unit is configured to control the active driving assist unit so as to actively assist the driver of the leaning vehicle with the width variation characteristic, based on the at least one set of information detected by the speed-related information detection unit and the information of the position of the leaning vehicle in the lane in the left-right direction of the lane, the information of the position being detected by the in-lane left-right position information acquisition unit.
   According to this arrangement, the speed-related information detection unit detects at least one of sets of information, the sets of information being: speed of the leaning vehicle in the traveling direction; acceleration of the leaning vehicle in the traveling direction; speed of the leaning vehicle in the vehicle front-rear direction; acceleration of the leaning vehicle in the vehicle front-rear direction; speed of the leaning vehicle in the vehicle left-right direction; and acceleration of the leaning vehicle in the vehicle left-right direction. A width preferable for running may vary in accordance with the speed or the acceleration of the leaning vehicle in the traveling direction. Furthermore, a width preferable for running may vary in accordance with the speed or the acceleration of the leaning vehicle in the vehicle front-rear direction. Furthermore, a width preferable for running may vary in accordance with the speed or the acceleration of the leaning vehicle in the vehicle left-right direction. The active driving assist control unit controls the active driving assist unit to actively assist the driver based on the at least one set of information detected by the speed-related information detection unit and the position of the leaning vehicle in the lane in the left-right direction of the lane. On this account, driving assist further in conformity with the driver's feeling of the leaning vehicle with the width variation characteristic can be realized.
[6] According to another aspect of the invention, the leaning vehicle of the present teaching preferably has the following arrangement.
   The active driving assist device includes a lane information detection unit configured to detect lane information related to the lane.
   The active driving assist control unit is configured to control the active driving assist unit so as to actively assist the driver of the leaning vehicle with the width variation characteristic, based on the lane information detected by the lane information detection unit and the information of the position of the leaning vehicle in the lane in the left-right direction of the lane, the information of the position being detected by the in-lane left-right position information acquisition unit.
   The lane information detection unit detects the lane information related to the lane in which the leaning vehicle runs. The lane information includes, for example, information regarding curves, corners, intersections, junctions, traffic lights, and crossings. The intersections include T-junctions, Y-junctions, and crossroads. The information regarding a curve may include information regarding the position of the curve and the curvature of the curve. The lane information may include traffic restriction information such as speed limit and traffic jam information. A preferred running situation of the leaning vehicle varies in accordance with the state of the lane. The active driving assist control unit controls the active driving assist unit to actively assist the driver based on the lane information detected by the lane information detection unit and the position of the leaning vehicle in the lane in the left-right direction of the lane. In this way, driving assist in conformity with the driver's feeling of the leaning vehicle with the width variation characteristic can be realized.
[7] According to another aspect of the invention, the leaning vehicle of the present teaching preferably has the following arrangement.
   The lane information detection unit detects at least one of sets of information, the sets of information being: width of the lane in the left-right direction of the lane or the vehicle left-right direction of the leaning vehicle; a direction of vehicle flow of a lane which is to the left of the lane in which the leaning vehicle runs; and a direction of vehicle flow of a lane which is to the right of the lane in which the leaning vehicle runs. The active driving assist control unit is configured to control the active driving assist unit so as to actively assist the driver of the leaning vehicle with the width variation characteristic, based on the at least one set of information detected by the lane information detection unit and the information of the position of the leaning vehicle in the lane in the left-right direction of the lane, the information of the position being detected by the in-lane left-right position information acquisition unit.
   According to this arrangement, the lane information detection unit detects at least one of sets of information, the sets of information being: width of the lane in the left-right direction of the lane or the vehicle left-right direction of the leaning vehicle; a direction of vehicle flow of a lane which is to the left of the lane in which the leaning vehicle runs; and a direction of vehicle flow of a lane which is to the right of the lane in which the leaning vehicle runs. A preferable minimum distance between an edge of the lane and the leaning vehicle may vary in accordance with the width of the lane in the left-right direction of the lane or the vehicle left-right direction of the leaning vehicle. Furthermore, a preferred running position of the leaning vehicle in the lane may vary in accordance with the direction of vehicle flow of a lane to the left of the lane in which the leaning vehicle runs and/or the direction of vehicle flow of a lane to the right of the lane in which the leaning vehicle runs. The active driving assist control unit controls the active driving assist unit to actively assist the driver based on the width of the lane and/or the direction of vehicle flow of a neighboring lane detected by the lane information detection unit and further based on the position of the leaning vehicle in the lane in the left-right direction of the lane. In this way, driving assist further in conformity with the driver's feeling of the leaning vehicle with the width variation characteristic can be realized.
[8] According to another aspect of the invention, the leaning vehicle of the present teaching preferably has the following arrangement.
   The lane information detection unit detects a state change spot where a state of the lane or a state of outside of the lane changes.
   In a region including the state change spot detected by the lane information detection unit, the active driving assist control unit is configured to control the active driving assist unit so as to actively assist the driver of the leaning vehicle with the width variation characteristic, based on the information of the position of the leaning vehicle in the lane in the left-right direction of the lane, the information of the position being detected by the in-lane left-right position information acquisition unit.
   According to this arrangement, the lane information detection unit detects a state change spot where a state of the lane or a state outside of the lane changes. The state change spot is, for example, a curve, a corner, an intersection, a junction, a branch, etc. When the leaning vehicle runs at a state change spot or before the leaning vehicle reaches the state change spot, a change of the traveling line of the leaning vehicle or a change of the posture of the leaning vehicle may be required. In the region including the state change spot detected by the lane information detection unit, the active driving assist control unit controls the active driving assist unit to actively assist the driver based on the information of the position of the leaning vehicle in the lane in the left-right direction of the lane. To put it differently, when the leaning vehicle runs in a region where a change of the traveling line or the vehicle posture is required, driving assist control in accordance with the position of the leaning vehicle in the lane is possible. In this way, driving assist in conformity with the driver's feeling of the leaning vehicle with the width variation characteristic can be realized.
   In regions other than the region including the state change spot, the active driving assist control unit may or may not control the active driving assist unit to actively assist the driver.
[9] According to another aspect of the invention, the leaning vehicle of the present teaching preferably has the following arrangement.
   The lane information detection unit detects at least one of a curve, a corner, an intersection, a junction, or a branch of the lane in which the leaning vehicle runs. In this specification, "at least one of a plurality of options" encompasses any possible combinations of the options. "At least one of a plurality of options" may be one of the options, or all of the options.
   When the leaning vehicle runs in a region including any of the curve, corner, intersection, junction, or branch of the lane detected by the lane information detection unit, the active driving assist control unit is configured to control the active driving assist unit so as to actively assist the driver of the leaning vehicle with the width variation characteristic, based on the information of the position of the leaning vehicle in the lane in the left-right direction of the lane, the information of the position being detected by the in-lane left-right position information acquisition unit.
   The lane information detection unit detects at least one of a curve, a corner, an intersection, a junction, or a branch of the lane. The curve, corner, intersection, junction, and branch are collectively termed a curve, etc. When the leaning vehicle runs at a curve, etc. or before the leaning vehicle reaches the curve, etc., a change of the traveling line of the leaning vehicle or a change of the posture of the leaning vehicle may be required. The active driving assist control unit controls the active driving assist unit to actively assist the driver, based on the information of the position of the leaning vehicle in the lane in the left-right direction of the lane, when the leaning vehicle runs in a region including any of a curve, a corner, an intersection, a junction, and a branch of the lane detected by the lane information detection unit. On this account, when the leaning vehicle runs in a region including a curve, etc., driving assist control in accordance with the position of the leaning vehicle in the lane can be done to achieve a preferred running situation. In this way, driving assist further in conformity with the driver's feeling of the leaning vehicle with the width variation characteristic can be realized.
[10] According to another aspect of the invention, the leaning vehicle of the present teaching preferably has the following arrangement.
   The active driving assist control unit is configured to control the active driving assist unit to adjust the first inter-vehicle distance based on the first inter-vehicle distance detected by the preceding vehicle information detection unit and the position of the leaning vehicle in the lane in the left-right direction of the lane acquired by the in-lane left-right position information acquisition unit.
   According to this arrangement, the active driving assist control unit controls the active driving assist unit so that the first inter-vehicle distance is adjusted based on the first inter-vehicle distance detected by the preceding vehicle information detection unit and the position of the leaning vehicle in the lane in the left-right direction of the lane. In other words, the first inter-vehicle distance which is the inter-vehicle distance between the preceding vehicle and the leaning vehicle is adjustable based on the position of the leaning vehicle in the lane in the left-right direction of the lane. In this way, driving assist in conformity with the driver's feeling of the leaning vehicle with the width variation characteristic can be realized.
[11] According to another aspect of the invention, the leaning vehicle of the present teaching preferably has the following arrangement.
   The upright state width of the leaning vehicle is equal to or shorter than the half of the width of the lane in the left-right direction of the lane.
[12] According to another aspect of the invention, the leaning vehicle of the present teaching preferably has the following arrangement.

The active driving assist control unit preferably controls the active driving assist unit so that the distance between an edge of the lane and the leaning vehicle in the left-right direction of the lane or the vehicle left-right direction of the leaning vehicle is equal to or longer than a predetermined limit distance, based on a result of sensing by the sensing unit and information of the position of the leaning vehicle in the lane in the left-right direction of the lane, the information being acquired by the in-lane left-right position information acquisition unit.

The limit distance is the distance when the leaning vehicle maximally approaches an edge of the lane. The limit distance may be a predetermined distance. The limit distance may be changed in accordance with the running situation. To be more specific, for example, the limit distance may be changed based on the at least one set of information detected by the preceding vehicle information detection unit. The limit distance may be changed based on the at least one set of information of the tilt angle, the tilt angular speed, and the tilt angular acceleration of the vehicle body frame of the leaning vehicle, the information being detected by the leaning detection unit. The limit distance may be changed based on the at least one set of information detected by the speed-related information detection unit. The limit distance may be changed based on the lane information detected by the lane information detection unit. The limit distance may be changed based on a condition different from the foregoing conditions.

The active driving assist control unit of the present teaching may control the active driving assist unit in accordance with the position of the leaning vehicle in the lane in the left-right direction of the lane, without using a result of sensing by the sensing unit.

In the present teaching, the vehicle front-rear direction of the leaning vehicle is a front-rear direction for the driver seated on the seat of the leaning vehicle. The vehicle left-right direction of the leaning vehicle is a left-right direction for the driver seated on the seat of the leaning vehicle. The vehicle front-rear direction and the vehicle left-right direction are in parallel to the road surface. The traveling direction of the leaning vehicle is close to the vehicle front-rear direction of the leaning vehicle but these directions may not coincide with each other.

In the present teaching, the acceleration encompasses both positive acceleration and negative acceleration. Furthermore, the jerk encompasses positive jerk and negative jerk.

In the present teaching, active assist to a driver indicates that the driving by the driver is assisted even when the driver is operating a vehicle. The active assist to the driver encompasses a case where a brake is activated to assist the driver even when the driver does not operate the brake.

In the present teaching, active assist to a driver does not encompass passive assist to a driver. Passive assist to a driver indicates that the driver is assisted in response to an operation by the driver. An example of the passive assist to the driver is a case where braking is assisted when the driver operates a brake.

When a driver performs an operation, the active driving assist device of the present teaching may perform assist to the driver irrespective of the operation by the driver. For example, when the driver performs a braking operation, the active driving assist device may assist the driver by activating the brake, irrespective of the braking operation by the driver. In summary, the active assist to the driver may be to assist the driving of the driver irrespective of operations by the driver.

When the driver performs an operation, the active driving assist device of the present teaching may not perform assist which is planned to be executed if the driver does not perform the operation. For example, when the driver performs a braking operation at the same time as the active driving assist control unit is about to activate the brake, the driver's operation may be prioritized.

In the present teaching, the active driving assist unit may include, for example, an acceleration controller which is configured to control the acceleration of the leaning vehicle. The acceleration controller controls the rotation of at least one of the front wheel unit or the rear wheel unit. The acceleration controller is preferably arranged to apply a driving force and a braking force to at least one of the front wheel unit or the rear wheel unit. The acceleration controller preferably includes an engine unit and a brake. The engine unit is configured to apply the driving force to at least one of the front wheel unit or the rear wheel unit. The brake is configured to impart the braking force to at least one of the front wheel unit or the rear wheel unit. The acceleration controller may include a motor in place of the engine unit. The motor is driven by electric power supplied from a battery of the leaning vehicle.

The active driving assist unit may include, for example, a mechanism for moving the leaning vehicle in the vehicle left-right direction.

The active driving assist unit may include, for example, a notification device which prompts the driver of the leaning vehicle to move the vehicle in the vehicle left-right direction.

In the present teaching, the width of the leaning vehicle in the left-right direction of the lane or the vehicle left-right direction may be the width of only the leaning vehicle or the width encompassing the leaning vehicle and the driver. The same applies to the width of each of an obliquely-neighboring vehicle and a preceding vehicle.

When the road surface is horizontal, the up-down direction in the present teaching is a direction orthogonal to the road surface, i.e., the direction of gravity. When the road surface is not horizontal, the up-down direction of the present teaching may be the direction gravity or a direction orthogonal to the road surface.

In the present teaching, the seat indicates a seated part and does not include a backrest part.

In the present teaching, the first inter-vehicle distance between the preceding vehicle and the leaning vehicle in the vehicle front-rear direction of the leaning vehicle may be distance between a predetermined part of the preceding vehicle and a predetermined part of the leaning vehicle in the vehicle front-rear direction of the leaning vehicle. The same applies to the distance between the preceding vehicle and the leaning vehicle in the traveling direction of the leaning vehicle.

In the present teaching, the detection of the distance between the preceding vehicle and the leaning vehicle in the vehicle front-rear direction of the leaning vehicle encompasses detection of an inter-vehicle time between the preceding vehicle and the leaning vehicle in the vehicle front-rear direction of the leaning vehicle. The same applies to the detection of the distance between the preceding vehicle and the leaning vehicle in the traveling direction of the leaning vehicle and the detection of the distance between the preceding vehicle and the leaning vehicle in the front-rear direction of the lane.

In the present teaching, the acquisition of information of the position of the leaning vehicle in the lane in the left-right direction of the lane may be a detection of the position by a sensor or the like or receiving of information of position input to an input unit of the leaning vehicle by the driver. In the latter case, a receiving unit which is configured to receive information input to the input unit is equivalent to the in-lane left-right position information acquisition unit.

In the present teaching, the detection of the speed in the vehicle front-rear direction encompasses detection of speed including a speed component in the vehicle front-rear direction. In the present teaching, the control of the leaning vehicle based on the speed in the vehicle front-rear direction encompasses control of the leaning vehicle based on speed including a speed component in the vehicle front-rear direction. The same applies to the speed in other directions. The same also applies to detections of relative speeds, accelerations, and relative accelerations in the vehicle front-rear direction and other directions.

In the present teaching, the adjustment of the first inter-vehicle distance may indicate maintenance of the first inter-vehicle distance at a predetermined target inter-vehicle distance. The target inter-vehicle distance is the inter-vehicle distance between a preceding vehicle and the leaning vehicle, and this distance is the target of maintenance. The adjustment of the first inter-vehicle distance may be adjustment of the first inter-vehicle distance to be equal to or longer than a predetermined limit inter-vehicle distance. The limit inter-vehicle distance is the inter-vehicle distance at which the leaning vehicle is maximally close to the preceding vehicle. The target inter-vehicle distance may be a constant distance. The target inter-vehicle distance may be changed in accordance with the running situation. The limit inter-vehicle distance may be a constant distance. The limit inter-vehicle distance may be changed in accordance with the running situation.

In the present teaching, one of the front-rear direction of the lane in which the leaning vehicle runs, the vehicle front-rear direction of the leaning vehicle, the traveling direction of the leaning vehicle, the traveling direction of the obliquely-neighboring vehicle, the vehicle front-rear direction of the obliquely-neighboring vehicle, the traveling direction of the preceding vehicle, the vehicle front-rear direction of the preceding vehicle, the traveling direction of the neighboring lane vehicle, and the vehicle front-rear direction of the neighboring lane vehicle may be replaced with one of the remaining directions.

In the present teaching, one of the left-right direction of the lane in which the leaning vehicle runs, the vehicle left-right direction of the leaning vehicle, the direction orthogonal to the traveling direction of the leaning vehicle, the direction orthogonal to the traveling direction of the obliquely-neighboring vehicle, the vehicle left-right direction of the obliquely-neighboring vehicle, the direction orthogonal to the traveling direction of the preceding vehicle, the vehicle left-right direction of the preceding vehicle, the direction orthogonal to the traveling direction of the neighboring lane vehicle, and the vehicle left-right direction of the neighboring lane vehicle may be replaced with one of the remaining directions.

In the present teaching, an end portion of a member indicates a portion constituted by an end and its surroundings of the member.

In the present teaching, an expression "members A and B are lined up in an X direction" indicates the following state. When the members A and B are viewed in a direction orthogonal to the X direction, the members A and B are both provided on a linear line which is parallel to the X direction. In the present teaching, an expression "members A and B are lined up in an X direction when viewed in a Y direction" indicates the following state. When the members A and B are viewed in the Y direction, the members A and B are both provided on a linear line which is parallel to the X direction. In this regard, when the members A and B are viewed in a W direction which is different from the Y direction, at least one of the members A or B may not be provided on the linear line which is parallel to the X direction. The members A and B may be in contact with each other. The members A and B may not be in contact with each other. A member C may be provided between the members A and B.

In this specification, an expression "a member A is provided forward of a member B" indicates the following state. The member A is provided in front of a plane which passes the front-most end of the member B and is orthogonal to the front-rear direction. In this connection, the members A and B may or may not be lined up in the front-rear direction. This applies to the directions other than the front-rear direction. (That is to say, this applies to the directions other than "forward of", such as "reaward of", "below", "leftward of", and "rightward of".)

In this specification, an expression "a member A is provided in front of a member B" indicates the following state. The members A and B are lined up in the front-rear direction and a part of the member A, the part facing the member B, is provided in front of the member B. According to this definition, when a part of the front surface of the member B, the part facing the member A, is the front-most end of the member B, the member A is provided forward of the member B. According to the definition, when a part of the front surface of the member B, the part facing the member A, is not the front-most end of the member B, the member A may or may not be provided forward of the member B. This applies to the directions other than the front-rear direction. (That is to say, this applies to the directions other than "in front of", such as "behind", "straight below", "to the left of", and "to the right of".) The front surface of the member B is a surface which is viewable when the member B is viewed from the front side. Depending on the shape of the member B, the front surface of the member B may be formed of plural surfaces, instead of a single continuous surface.

In this specification, an expression "a member A is provided in front of a member B when viewed in the left-right direction" indicates the following state. The members A and B are lined up in the front-rear direction when viewed in the left-right direction and a part of the member A, the part facing the member B, is provided in front of the member B when viewed in the left-right direction. According to this definition, the members A and B may not be lined up in the front-rear direction in three dimensions. This applies to the directions other than the front-rear direction. (That is to say, this applies to the directions other than "in front of", such as "behind", "straight below", "to the left of", and "to the right of'.)

It is noted that the terms "preferable" and "good" used herein are non-exclusive. The term "preferable" means "preferable but not limited to". Likewise, the term "good" means "good but not limited to".

In the present teaching, terms "including", "comprising", "having", and derivatives thereof are used to encompass not only listed items and equivalents thereof but also additional items. The terms "mounted", "connected", and "coupled" are used in broad sense. To be more specific, the terms encompass not only directly mounting, connection, and coupling but also indirect mounting, connection, and coupling. Furthermore, the terms "connected" and "coupled" do not merely indicate physical or mechanical connection and coupling. These terms encompass direct or indirect electric connection and coupling.

In the present teaching, the arrangements of the different aspects described above may be variously combined.

Before an embodiment of the present teaching is detailed, it is informed that the present teaching is not limited to the configurations and layout of elements described below and/or shown in drawings. The present teaching may be implemented as another embodiment, and embodiments may be variously modified. Furthermore, the present teaching may be implemented by suitably combining below-described modifications.

### [Brief Description of Drawings]

[FIG. 1] FIG. 1 is a schematic diagram showing two running situations of a leaning vehicle of an embodiment of the present teaching.
[FIG. 2] FIG. 2 is a left side view of a motorcycle of a specific example of the embodiment of the present teaching.
[FIG. 3] FIG. 3 is a front view which shows a state in which the vehicle body frame of the motorcycle shown in FIG. 2 leans.
[FIG. 4] FIG. 4 is a control block diagram of the motorcycle of FIG. 2.
[FIG. 5] FIG. 5 shows the structure of a brake mechanism of the motorcycle of FIG. 2.
[FIG. 6] FIG. 6 is a schematic plan view showing an example of the running situation of the motorcycle of FIG. 2.
[FIG. 7] FIG. 7 is a schematic plan view showing an example of the running situation of the motorcycle of FIG. 2.
[FIG. 8] FIG. 8 is a schematic plan view showing an example of the running situation of the motorcycle of FIG. 2.
[FIG. 9] FIG. 9 is a schematic plan view showing an example of the running situation of the motorcycle of FIG. 2.
[FIG. 10] FIG. 10 is a schematic plan view showing an example of the running situation of the motorcycle of FIG. 2.
[FIG. 11] FIG. 11 is a schematic plan view showing an example of the running situation of the motorcycle of FIG. 2.
[FIG. 12] FIG. 12 is a schematic plan view showing an example of the running situation of the motorcycle of FIG. 2.
[FIG. 13] FIG. 13 is a schematic plan view showing the process of running of the motorcycle of FIG. 2.
[FIG. 14] FIG. 14 is a schematic plan view showing an example of the running situation of the motorcycle of FIG. 2.
[FIG. 15] FIG. 15 is a schematic plan view showing an example of the running situation of the motorcycle of FIG. 2.
[FIG. 16] FIG. 16 is a flowchart showing an example of a process of control of the motorcycle of FIG. 2.
[FIG. 17] FIG. 17 is a schematic plan view showing an example of the running situation of a motorcycle of a modification.

### [Description of Embodiments]

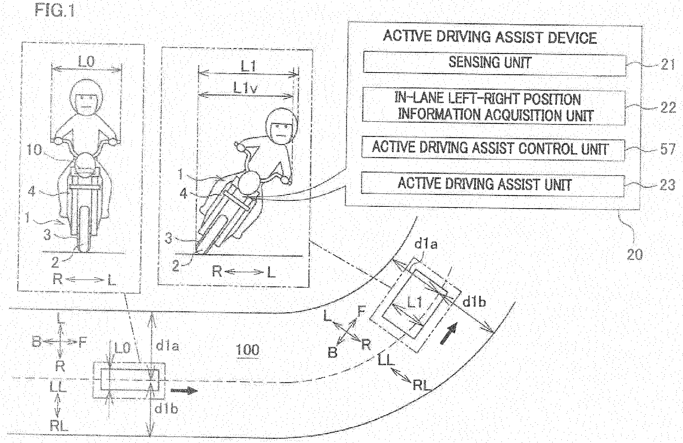

The following will describe a leaning vehicle 1 of an embodiment of the present teaching with reference to FIG. 1. Hereinafter, a vehicle front-rear direction may be simply referred to as a front-rear direction. Likewise, a vehicle left-right direction may be simply referred to as a left-right direction. An arrow F and an arrow B in FIG. 1 indicate forward and rearward in the vehicle front-rear direction, respectively, whereas an arrow L and an arrow R indicate leftward and rightward in the vehicle left-right direction, respectively. An arrow LL and an arrow RL indicate leftward and rightward in the left-right direction of a lane on which the leaning vehicle 1 runs, respectively.

The leaning vehicle 1 includes a vehicle body frame 4, a seat 10, a front wheel unit 2, a rear wheel unit 3, and an active driving assist device 20. The vehicle body frame 4 leans rightward in the vehicle left-right direction when turning right and leans leftward in the vehicle left-right direction when turning left. The seat 10, the front wheel unit 2, and the rear wheel unit 3 are supported by the vehicle body frame 4. The front wheel unit 2 includes at least one front wheel. Although FIG. 1 shows one front wheel, the number of front wheels is not limited to one. At least a part of the front wheel unit 2 is provided forward of the seat 10 in the vehicle front-rear direction. The rear wheel unit 3 includes at least one rear wheel. Although FIG. 1 shows one rear wheel, the number of rear wheels is not limited to one. Although the leaning vehicle 1 shown in FIG. 1 is a motorcycle, the leaning vehicle 1 may not be a motorcycle. At least a part of the rear wheel unit 3 is provided rearward of the seat 10 in the vehicle front-rear direction.

FIG. 1 shows a state in which the vehicle body frame 4 of the leaning vehicle 1 leans and a state in which the vehicle body frame 4 is upright. As shown in FIG. 1, the width which encompasses the leaning vehicle 1 and the driver when the vehicle body frame 4 is upright is referred to as an upright state width L0. The upright state width L0 is substantially identical with the width of only the leaning vehicle 1 when the vehicle body frame 4 is upright. The width which encompasses the leaning vehicle 1 and the driver when the vehicle body frame 4 leans is referred to as a lean state width L1. Furthermore, the width of the leaning vehicle 1 when the vehicle body frame 4 leans is referred to as a leaning vehicle width L1v. The widths L0, L1, and L1v are widths measured in the left-right direction (LLRL direction) of a lane 100 on which the leaning vehicle 1 runs. A characteristic that the lean state width L1 is longer than the upright state width L0 is referred to as a width variation characteristic. The leaning vehicle 1 has this width variation characteristic.

The active driving assist device 20 is configured to actively assist the driver. The active driving assist device 20 includes a sensing unit 21, an in-lane left-right position information acquisition unit 22, an active driving assist unit 23, and an active driving assist control unit 57. The sensing unit 21 is configured to sense objects in front of, behind, or both in the vehicle front-rear direction of the leaning vehicle 1. The in-lane left-right position information acquisition unit 22 is configured to obtain information of a position of the leaning vehicle 1 in the lane 100 in the left-right direction (LLRL direction) of the lane 100. To be more specific, for example, the distance d1a between the left edge of the lane 100 and a predetermined part of the leaning vehicle 1 and the distance d1b between the right edge of the lane 100 and a predetermined part of the leaning vehicle 1 are detected. The active driving assist control unit 57 controls the active driving assist unit 23 so as to actively assist the driver of the leaning vehicle 1 in accordance with the result of sensing by the sensing unit 21 and the information of the position of the leaning vehicle 1 in the lane 100 in the left-right direction of the lane 100, the information being obtained by the in-lane left-right position information acquisition unit 22.

The leaning vehicle 1 is narrower in width than a passenger vehicle. The leaning vehicle 1 is therefore able to run on a selected position in a single lane 100. Furthermore, the leaning vehicle 1 has a width variation characteristic such that, in the left-right direction of the lane 100 in which the leaning vehicle 1 runs, the lean state width L1 encompassing the leaning vehicle 1 and the driver when the vehicle body frame 4 leans is longer than the upright state width L0 encompassing the leaning vehicle 1 and the driver when the vehicle body frame 4 is upright. On this account, even though the upright state width L0 is short, a sufficient width is required in the left-right direction of the lane 100 in some running situations.

The active driving assist device 20 includes the active driving assist unit 23, the sensing unit 21, the in-lane left-right position information acquisition unit 22, and the active driving assist control unit 57. The active driving assist unit 23 is configured to be able to actively assist the driver of the leaning vehicle 1 having the width variation characteristic. The sensing unit 2.1 is configured to sense objects in front of, behind, or both in the vehicle front-rear direction of the leaning vehicle 1. The in-lane left-right position information acquisition unit 22 is configured to obtain information of a position of the leaning vehicle 1 in the lane 100 in the left-right direction of the lane 100. The active driving assist control unit 57 controls the active driving assist unit 23 so as to actively assist the driver in accordance with the result of sensing by the sensing unit 21 and the information of the position of the leaning vehicle 1 in the lane 100 in the left-right direction of the lane 100, the information being obtained by the in-lane left-right position information acquisition unit 22. Based on the result of the sensing by the sensing unit 21 and the information of the position of the leaning vehicle 1 in the lane 100 in the left-right direction of the lane 100, it is possible to grasp a width preferable for the leaning vehicle 1 which runs in the lane 100. In this way, driving assist in conformity with the driver's feeling of the leaning vehicle 1 with the width variation characteristic can be realized.

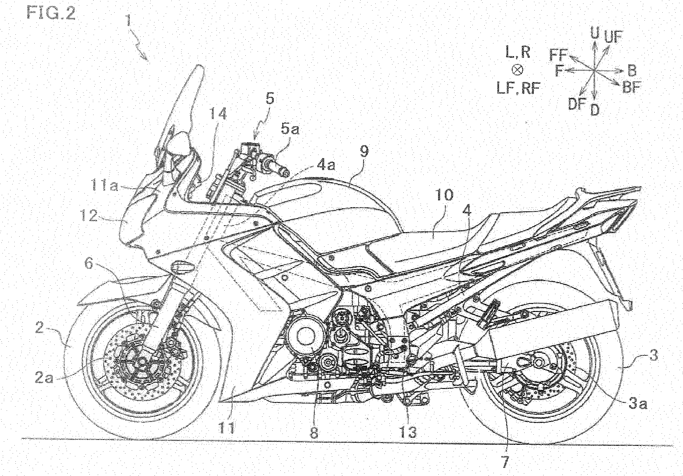

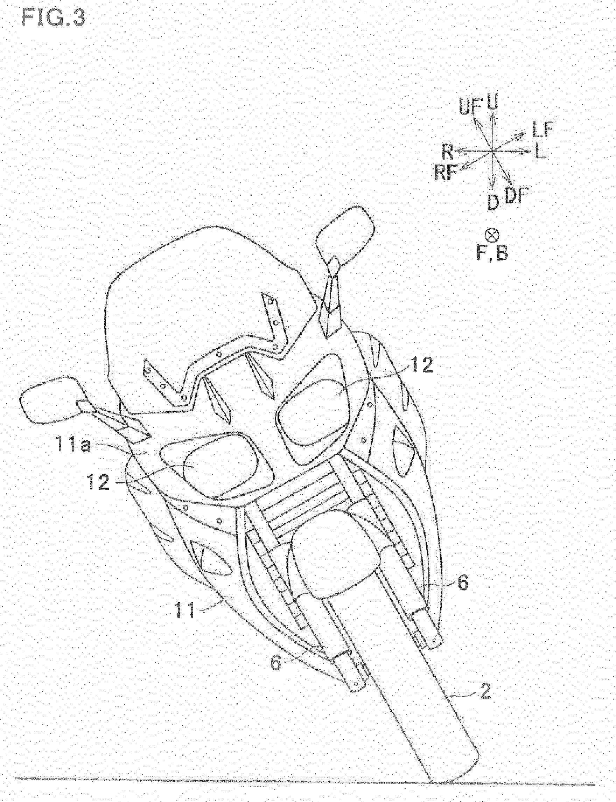

A specific example of the above-described embodiment of the present teaching will be described with reference to FIG. 2 to FIG. 16. The following describes a case where the leaning vehicle 1 of the embodiment of the present teaching is a motorcycle. In the descriptions below, members identical with those in the above-described embodiment of the present teaching are not explained again. Basically, a specific example of an embodiment of the present teaching fully encompasses the embodiment of the present teaching. An arrow F and an arrow B in each figure indicate forward and rearward in the vehicle front-rear direction, respectively, whereas an arrow L and arrow R indicate leftward and rightward in the vehicle left-right direction, respectively. Arrows U and D indicate upward and downward, respectively. An up-down direction is a direction vertical to the road surface. FIG. 2 shows the motorcycle 1 in an upright state. FIG. 3 shows the motorcycle 1 in which the vehicle body frame 4 leans. In both FIG. 2 and FIG. 3, the road surface is horizontal.

<Overall Structure of Motorcycle 1>

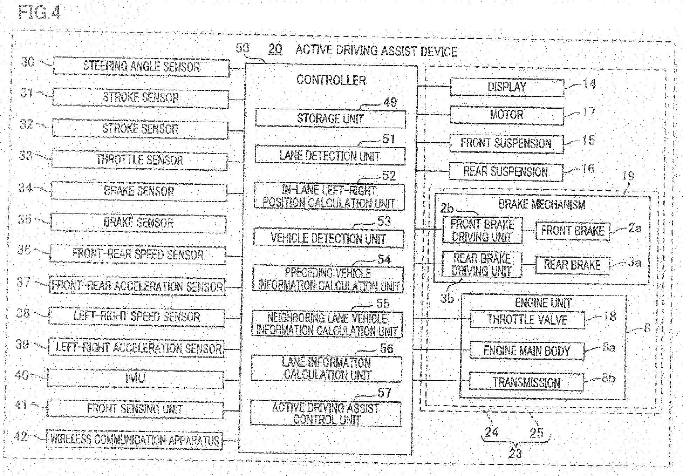

As shown in FIG. 2, the motorcycle 1 includes the front wheel unit 2, the rear wheel unit 3, and the vehicle body frame 4. A head pipe 4a is provided at a front portion of the vehicle body frame 4. A steering shaft (not illustrated) is rotatably inserted into the head pipe 4a. An upper end portion of the steering shaft is connected to a handle unit 5. Upper end portions of paired left and right front forks 6 are secured to the handle unit 5. Lower end portions of the front forks 6 support the front wheel unit 2. The front wheel unit 2 is formed of a single front wheel. The front wheel includes a tire and a wheel. When the handle unit 5 is steered, a plane, which passes the center in the width direction of the front wheel and is orthogonal to the axle shaft, leans relative to the vehicle front-rear direction (FB direction) of the motorcycle 1. Each front fork 6 includes a front suspension 15 (see FIG. 4) which is constructed to absorb shocks in the up-down direction.

A front end portion of each swingarm 7 is swingably supported by a rear portion of the vehicle body frame 4. A rear end portion of this swingarm 7 supports the rear wheel unit 3. The rear wheel unit 3 is formed of a single rear wheel. The swingarms 7 are connected to the vehicle body frame 4 by paired left and right rear suspensions 16 (see FIG. 4) which are constructed to absorb shocks in the up-down direction.

A front brake 2a is provided at the front wheel unit 2. A rear brake 3a is provided at the rear wheel unit 3. The front brake 2a and the rear brake 3a are so-called disc brakes. The front brake 2a and the rear brake 3a may not be disc brakes. A brake converts a kinetic energy to another type of energy (e.g., heat energy) or another kinetic energy. The front brake 2a and the rear brake 3a may be drum brakes. The front brake 2a and the rear brake 3a may be hydraulic brakes, mechanical brakes, or electric brakes.

The vehicle body frame 4 supports a fuel tank 9 and a seat 10. Furthermore, the vehicle body frame 4 supports an engine unit 8. The engine unit 8 is provided below the upper end of the seat 10. When viewed in the up-down direction, at least a part of the engine unit 8 may or may not overlap the seat 10. In other words, at least a part of the engine unit 8 may not be positioned straight below the seat 10. The engine unit 8 may be a 4-stroke engine or a 2-stroke engine.

Although not illustrated, the engine unit 8 includes an engine main body 8a and a transmission 8b, as shown in FIG. 4. The driving force output from the engine main body 8a is transmitted to the rear wheel unit 3 via the transmission 8b. The vehicle body frame 4 further supports a battery (not illustrated). The battery is configured to supply electric power to electronic apparatuses such as a later-described controller 50 and sensors.

As shown in FIG. 4, the motorcycle 1 includes a wireless communication apparatus 42. The wireless communication apparatus 42 is configured to be able to receive a GNSS (Global Navigation Satellite System) signal. The GNSS signal includes, for example, current position information such as longitude and latitude. The wireless communication apparatus 42 is configured to be able to perform vehicle-to-vehicle communication and road-to-vehicle communication. The vehicle-to-vehicle communication is communication between on-board communication apparatuses. The road-to-vehicle communication is communication between a road-side communication apparatus and an on-board communication apparatus. The on-board communication apparatus transmits information, such as the speed of a vehicle on which the on-board communication apparatus is mounted, to a road-side communication apparatus or an on-board communication apparatus of another vehicle. The road-side communication apparatus transmits information regarding a road (e.g., signal information and traffic control information) to an on-board communication apparatus. In addition to this, the road-side communication apparatus transmits information received from an on-board communication apparatus to another on-board communication apparatus. Information transmitted by the road-side communication apparatus may include presence/absence of a vehicle and the speed of a vehicle. The wireless communication apparatus 42 may be constructed to be able to receive a signal transmitted from a communication center remote from the road. Data received by the wireless communication apparatus 42 may include map data.

At least a part of the vehicle body frame 4 is covered with a vehicle body cover 11. The vehicle body cover 11 includes a front cowling 11a which is provided at a front portion of the motorcycle 1. A headlight 12 is provided in the front cowling 11a.

As shown in FIG. 2, footrests 13 are provided at lower parts on left and right sides of the motorcycle 1, respectively. A brake pedal, which is not illustrated, is provided in front of the right footrest 13. When the driver operates the brake pedal, the rear brake 3a is activated and the rear wheel unit 3 brakes. The rear brake 3a is activated not only in response to an operation of the brake pedal but also by a rear brake driving unit 3b (see FIG. 4). The rear brake driving unit 3b is controlled by the controller 50. The rear brake 3a and the rear brake driving unit 3b are included in a brake mechanism 19.

The handle unit 5 includes a left grip 5a (see FIG. 2 and FIG. 3) and a right grip 5b (see FIG. 3). The right grip 5b is an accelerator grip. The accelerator grip 5b is operated to adjust the output of the engine main body 8a. To be more specific, the accelerator grip 5b is operated to adjust the opening degree of a throttle valve 18 of the engine unit 8. A brake lever (not illustrated) is provided in front of the right grip 5b. When the driver operates the brake lever, the front brake 2a is activated and the front wheel unit 2 brakes. The front brake 2a is activated not only in response to an operation of the brake lever but also by a front brake driving unit 2b (see FIG. 4). The front brake driving unit 2b is controlled by the controller 50. The front brake 2a and the front brake driving unit 2b are included in the brake mechanism 19.

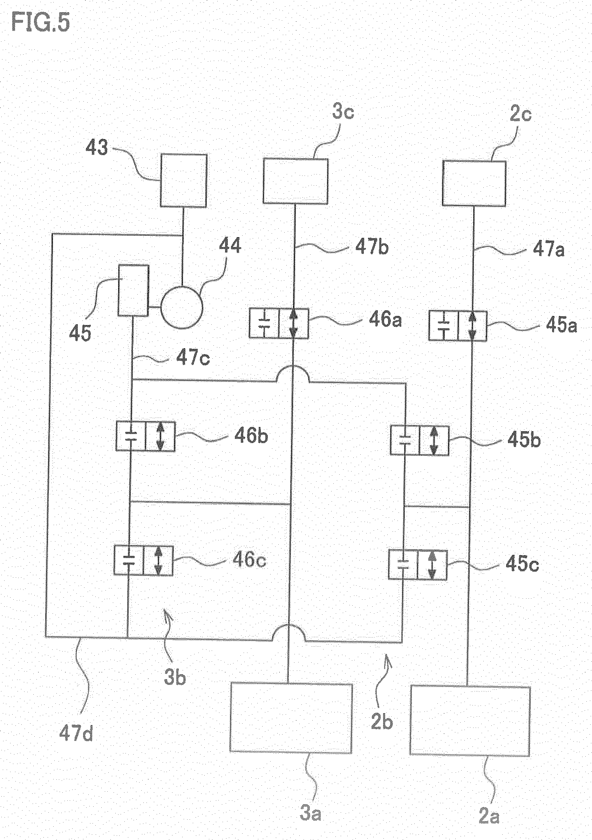

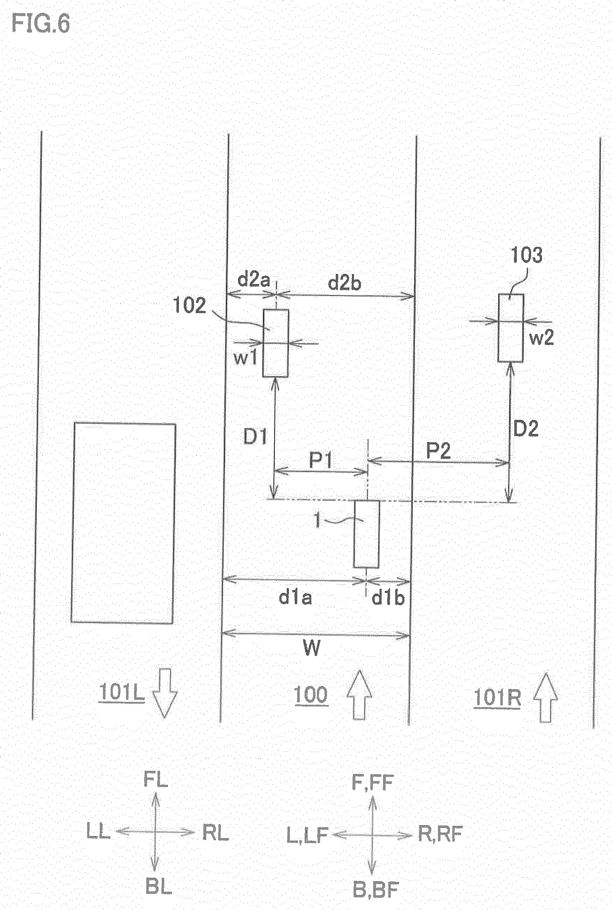

The following will describe a specific example of the brake mechanism 19 when the front brake 2a and the rear brake 3a are hydraulic brakes, with reference to FIG. 5. It is noted that the brake mechanism 19 is not limited to the specific example shown in FIG. 6. As shown in FIG. 5, the brake mechanism 19 includes a reserve tank 43, a pump 44, an accumulator 45, and valves 45a to 45c and 46a to 46c. When a driving assist mode or an autonomous driving mode is set, the pump 44 is always drivable by a motor. The valves 45a to 45c and 46a to 46c are controlled by the controller 50. Each of the valves 45a to 45c and 46a to 46c is, for example, an electromagnetic valve. A master cylinder 2c of the brake lever is connected to the front brake 2a via a first hydraulic passage 47a. A master cylinder 3c of the brake pedal is connected to the rear brake 3a via a second hydraulic passage 47b. A first front valve 45a is provided on the first hydraulic passage 47a, whereas a first rear valve 46a is provided on the second hydraulic passage 47b. The reserve tank 43 is connected to a third hydraulic passage 47c through which oil is supplied from the reserve tank 43 to the front brake 2a and the rear brake 3a. The reserve tank 43 is further connected to a fourth hydraulic passage 47d through which oil is supplied from the front brake 2a and the rear brake 3a to the reserve tank 43. A part of the third hydraulic passage 47c is a part of the fourth hydraulic passage 47d, too. The pump 44, the accumulator 45, a second front valve 45b, and a second rear valve 46b are provided on the third hydraulic passage 47c. A third front valve 45c and a third rear valve 46c are provided on the fourth hydraulic passage 47d. In the normal state, as shown in FIG. 5, the first front valve 45a and the first rear valve 46a are open whereas the other valves 45b, 45c, 46b, and 46c are closed. In response to an operation of the brake lever in this state, the hydraulic pressure in the front brake 2a increases and hence the front brake 2a is activated. When the controller 50 activates the front brake 2a, the controller 50 opens the second front valve 45b and closes the other valves. As a result, oil pressure-supplied from the pump 44 is supplied to the front brake 2a. Thereafter, if it is necessary to keep the front brake 2a activated, the controller 50 closes the second front valve 45b. With this, the hydraulic pressure in the front brake 2a is maintained. If it is necessary to release the front brake 2a, the controller 50 opens the third front valve 45c while keeping the second front valve 45b to be closed. With this, oil returns to the reserve tank 43 from the front brake 2a. The front brake driving unit 2b includes a third hydraulic passage 47b, a fourth hydraulic passage 47c, the reserve tank 43, the pump 44, the accumulator 45, and first to third front valves 45a to 45c. The rear brake driving unit 3b includes the third hydraulic passage 47b, the fourth hydraulic passage 47c, the reserve tank 43, the pump 44, the accumulator 45, and the first to third rear valves 46a to 46c.

As shown in FIG. 2, a display 14 is provided in front of the handle unit 5 and behind the front cowling 11a. The display 14 is configured to display, for example, vehicle speed, engine rotation speed, warnings, and the like. The handle unit 5 is provided with switches. By operating a switch, power supply from the battery to an electric device is started or stopped. Further, by operating a switch, the engine unit 8 is started or stopped. Further, by operating a switch, a screen image displayed on the display 14 is switched. Further, by operating a switch, one of selection items displayed on the display 14 is selected. Further, by operating a switch, one of riding modes is selected. The riding modes include a manual driving mode, the driving assist mode, and the autonomous driving mode. Each of these modes will be detailed later.

Arrows UF, DF, FF, BF, LF, and RF in FIG. 2 and FIG. 3 indicate upward, downward, forward, rearward, leftward, and rightward in the up-down direction, front-rear direction, or the left-right direction of the vehicle body frame 4, respectively. In this specification, an up-down direction (UFDF direction) of the vehicle body frame 4 is in parallel to the axial direction of the head pipe 4a of the vehicle body frame 4. A left-right direction (LFRF direction) of the vehicle body frame 4 is orthogonal to a plane which passes the center in the width direction of the vehicle body frame 4. A front-rear direction (FFBF direction) of the vehicle body frame 4 is orthogonal to both the up-down direction (UFDF direction) of the vehicle body frame 4 and the left-right direction (LFRF direction) of the vehicle body frame 4.

As shown in FIG. 3 and FIG. 1, the vehicle body frame 4 of the motorcycle 1 leans rightward in the vehicle left-right direction when turning right and leans leftward in the vehicle left-right direction when turning left. When the vehicle body frame 4 leans, the vehicle left-right direction (LR direction) of the motorcycle 1 does not coincide with the left-right direction (LFRF direction) of the vehicle body frame 4 in front view. When the vehicle body frame 4 leans in the left-right direction, the up-down direction (UD direction) of the motorcycle 1 does not coincide with the up-down direction (UFDF direction) of the vehicle body frame 4 in front view. When viewed in the up-down direction, the vehicle front-rear direction (FB direction) of the motorcycle 1 coincides with the front-rear direction (FFBF direction) of the vehicle body frame 4. When the handle unit 5 is rotated, a plane, which passes the center in the width direction of the front wheel, leans relative to the vehicle front-rear direction (FB direction) of the motorcycle 1 and the front-rear direction (FFBF direction) of the vehicle body frame 4 when viewed in the up-down direction.

As shown in FIG. 1(a), the width which encompasses the motorcycle 1 when the vehicle body frame 4 is upright and the driver is referred to as an upright state width L0. The upright state width L0 is substantially identical with the width of only the motorcycle 1 when the vehicle body frame 4 is upright. As shown in FIG. 1(b), the width which encompasses the motorcycle 1 and the driver when the vehicle body frame 4 leans is referred to as a lean state width L1. Furthermore, the width of the motorcycle 1 when the vehicle body frame 4 leans is referred to as a leaning vehicle width L1v. The widths L0, L1, and L1v are widths measured in a left-right direction (LLRL direction) of the lane. Each of the widths L0, L1, and L1v may be a width in the vehicle left-right direction (LR direction) or a width in a direction orthogonal to the traveling direction of the motorcycle 1.

As shown in FIG. 4, the motorcycle 1 includes a steering angle sensor 30 which is configured to detect a steering angle of a steering shaft. The motorcycle 1 includes a stroke sensor 31 which is configured to detect an extension amount of a front suspension of the front fork 6. The motorcycle 1 includes a stroke sensor 32 which is configured to detect an extension amount of a rear suspension. The motorcycle 1 includes a throttle opening degree sensor 33 which is configured to detect the opening degree of a throttle valve 18. The motorcycle 1 includes a brake sensor 34 which is configured to detect a braking force exerted to the front wheel unit 2 by the front brake 2a. The motorcycle 1 includes a brake sensor 35 which is configured to detect a braking force exerted to the rear wheel unit 3 by the rear brake 3a.

As shown in FIG. 4, the motorcycle 1 includes a front-rear speed sensor 36, a front-rear acceleration sensor 37, a left-right speed sensor 38, and a left-right acceleration sensor 39. The front-rear speed sensor 36 is configured to detect the speed V1_{FB} of the motorcycle 1 in the vehicle front-rear direction (FB direction). The front-rear acceleration sensor 37 is configured to detect the acceleration A1_{FB} of the motorcycle 1 in the vehicle front-rear direction (FB direction). The left-right speed sensor 38 is configured to detect the speed V1_{LR} of the motorcycle 1 in the vehicle left-right direction (LR direction). The left-right acceleration sensor 39 is configured to detect the acceleration A1_{LR} of the motorcycle 1 in the vehicle left-right direction (LR direction). The motorcycle 1 may include a sensor which is configured to detect the speed in the traveling direction. Further, the motorcycle 1 may include a sensor which is configured to detect the acceleration in the traveling direction. The front-rear speed sensor 36, the front-rear acceleration sensor 37, the left-right speed sensor 38, and the left-right acceleration sensor 39 are equivalent to a speed-related information detection unit of the present teaching. The speed V1_{FB} may be detected by the later-described controller 50 based on a signal transmitted from the front-rear speed sensor 36. In this case, the front-rear speed sensor 36 and the controller 50 are equivalent to the speed-related information detection unit of the present teaching. The same applies to the front-rear acceleration sensor 37, the left-right speed sensor 38, and the left-right acceleration sensor 39.

The motorcycle 1 includes an IMU (Inertial Measurement Unit) 40. The IMU 40 is a device configured to measure the posture and the traveling direction of the motorcycle 1. The IMU 40 includes at least a three-axis gyroscope and a three-directional accelerometer. The IMU 40 is configured to detect angles or angular accelerations of three axes and accelerations in three directions. The accelerations in the three directions are acceleration in the front-rear direction (FFBF direction) of the vehicle body frame 4, the acceleration in the left-right direction (LFRF direction) of the vehicle body frame 4, and the acceleration in the up-down direction (UFDF direction) of the vehicle body frame 4. The three axes are a yaw axis, a roll axis, and a pitch axis of the motorcycle 1. The yaw axis of the motorcycle 1 extends in the up-down direction (UFDF direction) of the vehicle body frame 4. The roll axis of the motorcycle 1 extends in the front-rear direction (FFBF direction) of the vehicle body frame 4. The pitch axis of the motorcycle 1 extends in the left-right direction (LFRF direction) of the vehicle body frame 4. The angles of the three axes are a yaw angle, a roll angle, and a pitch angle of the motorcycle 1, respectively. The angular speeds of the three axes are a yaw rate, a roll rate, and a pitch rate of the motorcycle 1, respectively. The yaw angle, the roll angle, and the pitch angle of the motorcycle 1 are equivalent to rotational angles around the yaw axis, the roll axis, and the pitch axis of the motorcycle 1, respectively. The yaw rate, the roll rate, and the pitch rate of the motorcycle 1 are angular speeds of the rotation around the yaw axis, the roll axis, and the pitch axis of the motorcycle 1, respectively.

A roll angle θ1 of the motorcycle 1 is a tilt angle of leaning in the vehicle left-right direction (LR direction) of the vehicle body frame 4. A roll rate ω1 of the motorcycle 1 is a tilt angular speed of leaning in the vehicle left-right direction (LR direction) of the vehicle body frame 4. The IMU 40 is configured to detect the leaning in the vehicle left-right direction (LR direction) of the motorcycle 1. The IMU 40 is equivalent to a leaning detection unit of the present teaching. The roll angle or the roll rate may be detected by the later-described controller 50 based on a signal transmitted from the IMU 40. In this case, the IMU 40 and the controller 50 are equivalent to the leaning detection unit of the present teaching. Hereinafter, the IMU 40 may be termed a sensor 40.

The motorcycle 1 includes a front sensing unit 41 which is configured to sense objects in front of the motorcycle 1. The front sensing unit 41 may be provided at any position on condition that objects in front of the motorcycle 1 can be sensed. The front sensing unit 41 may be, for example, provided at the headlight 12 in the front cowling 11a. The front sensing unit 41 includes at least one of, for example, a camera, a millimeter wave radar, a microwave radar, a laser radar, an ultrasonic sensor, an acoustic sensor, an infrared sensor, a radio wave/electric field sensor, a magnetic sensor, or a range image sensor. Such radars and sensors are configured to emit a millimeter wave or the like forward from the motorcycle 1 and receive a reflected wave reflected on an object. The camera may be a monocular camera or compound-eye camera. In the descriptions below, the front sensing unit 41 may be referred to as a sensor 41. The front sensing unit 41 is included in the sensing unit 21 shown in FIG. 1.

The motorcycle 1 is switchable between the manual driving mode, the driving assist mode, and the autonomous driving mode. A driving operation of the motorcycle 1 is performed by the driver in the manual driving mode. The driving operation of the motorcycle 1 is performed by the driver but the driver is actively assisted in the driving assist mode. In the driving assist mode, the drive control of the motorcycle 1 by the driver may be passively assisted. In the autonomous driving mode, the driver is actively assisted so that the motorcycle 1 automatically reaches a destination even though the drive control of the motorcycle 1 is not performed by the driver. The driving assist mode may be automatically set in accordance with the running situation, even though the mode is not selected by the driver. The driving assist mode may include a plurality of sub-modes.

### <Structure of Controller 50>

As shown in FIG. 4, the motorcycle 1 includes the controller 50 which is configured to control operations of parts of the motorcycle 1. The controller 50 is connected to the sensors 30 to 41 and the wireless communication apparatus 42, which have been described above. The sensors, the wireless communication apparatus 42, and the controller 50 constitute the active driving assist device 20. The controller 50 is, for example, formed of a CPU (Central Processing Unit), a ROM (Read Only Memory), and a RAM (Random Access Memory). The CPU executes information processing based on a program and data sets stored in the ROM and the RAM.

As shown in FIG. 4, the controller 50 includes, as function processors, a lane detection unit 51, an in-lane left-right position calculation unit 52, a vehicle detection unit 53, a preceding vehicle information calculation unit 54, a neighboring lane vehicle information calculation unit 55, a lane information calculation unit 56, and the active driving assist control unit 57.

The controller 50 includes a storage unit 49 including a ROM and a RAM. The storage unit 49 stores map data. The map data stored in the storage unit 49 may be updated with data supplied from the wireless communication apparatus 42. The storage unit 49 further stores the upright state width L0 of the motorcycle 1. The storage unit 49 may store the length of the motorcycle 1 in the vehicle front-rear direction (FB direction).

As shown in figures such as FIG. 6, the width of the lane 100 in which the motorcycle 1 runs is at least twice as long as the upright state width L0 (see FIG. 1) of the motorcycle 1. A lane mark (e.g., a white line) may or may not be provided at each edge of the lane 100. Arrows FL, BL, LL, and RL in each figure indicate forward, rearward, leftward, and rightward in the front-rear direction of the lane 100, respectively. Hereinafter, the front-rear direction of the lane 100 will be referred to as a lane front-rear direction (FLBL direction). Furthermore, the left-right direction of the lane 100 will be referred to as a lane left-right direction (LLRL direction).

On the lane 100, a vehicle running in a region forward of (F direction) the motorcycle 1 will be referred to as a preceding vehicle 102. On a neighboring lane 101, a vehicle running in a region forward of (F direction) the motorcycle 1 will be referred to as a neighboring lane vehicle 103.

A lane to the left of (LL direction) the lane 100 will be referred to as a left lane 101L. A lane to the right of (RL direction) the lane 100 will be referred to as a right lane 101R. The left lane 101L and the right lane 101R are collectively termed neighboring lanes 101. In the specific example of the embodiment of the present teaching, the direction of vehicle flow of the left lane 101L is opposite to the direction of vehicle flow of the lane 100. The direction of vehicle flow of the right lane 101R is identical with the direction of vehicle flow of the lane 100. Outline arrows attached to the lanes 100 and 101 in each figure indicate direction of vehicle flow.

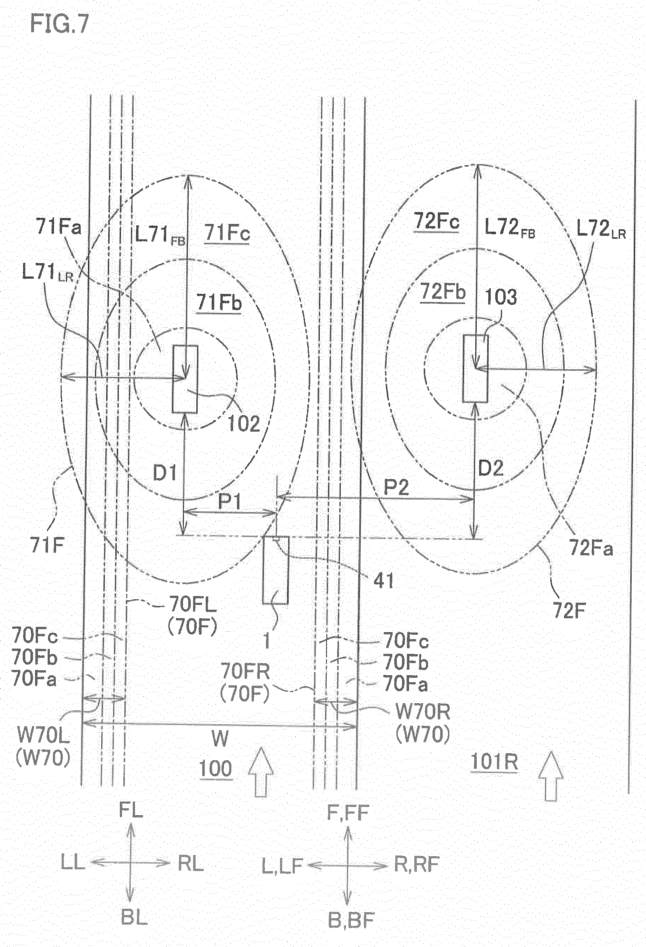

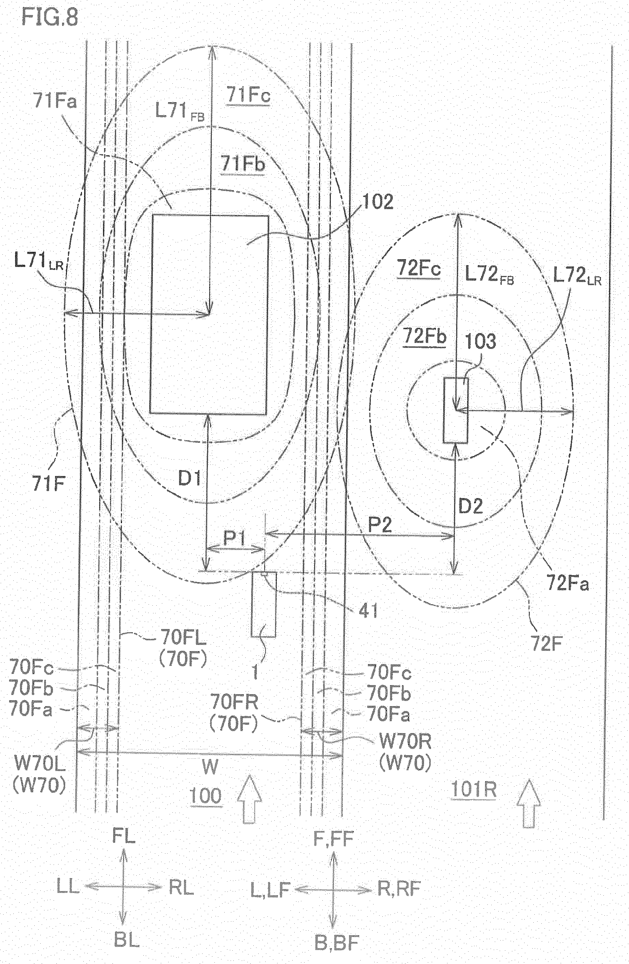

In FIG. 6 and FIG. 7, the preceding vehicle 102 is a leaning vehicle. In FIG. 8, the preceding vehicle 102 is a passenger vehicle. The neighboring lane vehicle 103 shown in each of FIG. 6 to FIG. 8 is a leaning vehicle, but the neighboring lane vehicle 103 may be a passenger vehicle.

The lane detection unit 51 is configured to detect the lane 100 in which the motorcycle 1 runs. The detection of the lane 100 means that the positions of the respective edges of the lane 100 are detected. The lane detection unit 51 may detect the lane 100 based on a result of sensing by the front sensing unit 41. For example, the lane 100 may be detected based on lane marks (e.g., white lines). The lane detection unit 51 may detect the lane 100 based on a GNSS signal which is received by the wireless communication apparatus 42 and map data which is either stored in the storage unit 49 or received by the wireless communication apparatus 42. The lane detection unit 51 may detect the lane 100, based on information other than a GNSS signal, the information being received by the wireless communication apparatus 42. The lane 100 may be detected based on a combination of these sets of information

The lane detection unit 51 is configured to detect the presence/absence of a neighboring lane 101. The lane detection unit 51 may detect the positions of the respective edges of a neighboring lane 101. The lane detection unit 51 is configured to detect the presence/absence of a neighboring lane 101 based on information which is at least one of a result of sensing by the front sensing unit 41, map data, or information which is received by the wireless communication apparatus 42 and is not map data. The same applies to the detection of the positions of the respective edges of a neighboring lane 101.

The in-lane left-right position calculation unit 52 is configured to detect the position of the motorcycle 1 in the lane 100 in the lane left-right direction (LLRL direction). The detection of the position of the motorcycle 1 in the lane 100 in the lane left-right direction (LLRL direction) includes, to be more specific, the following ways. For example, the distances d1a and d1b (see FIG. 7 and FIG. 8) between the edges of the lane 100 and a predetermined part of the motorcycle 1 in the lane left-right direction (LLRL direction) are detected. Alternatively, for example, only the distance (d1a or d1b) between one edge of the lane 100 and the predetermined part of the motorcycle 1 in the lane left-right direction (LLRL direction) is detected. Alternatively, for example, the lane 100 is divided into a plurality of regions which are lined up in the lane left-right direction (LLRL direction), and in which region the motorcycle 1 locates is detected.

The in-lane left-right position calculation unit 52. may detect the position of the motorcycle 1 in the lane 100 in the lane left-right direction (LLRL direction) based on a result of sensing by the front sensing unit 41. To be more specific, for example, the front sensing unit 41 is a camera, and the position of the motorcycle 1 is detected by detecting the positions of the edges of the lane 100 based on an image.

The in-lane left-right position calculation unit 52 may detect the position not based on a result of sensing by the front sensing unit 41 but based on a GNSS signal which is received by the wireless communication apparatus 42 and map data which is either stored in the storage unit 49 or received by the wireless communication apparatus 42. The in-lane left-right position calculation unit 52 may detect the position based on a result of sensing by the front sensing unit 41, a GNSS signal, and map data.

The vehicle detection unit 53 is configured to detect a preceding vehicle 102 or a neighboring lane vehicle 103. The vehicle detection unit 53 is configured to determine the presence/absence of a preceding vehicle 102 and a neighboring lane vehicle 103 based on a result of sensing by the front sensing unit 41. The vehicle detection unit 53 is configured to determine whether a detected vehicle is a preceding vehicle 102 or a neighboring lane vehicle 103, based on a detection result of the lane detection unit 51.

The preceding vehicle information calculation unit 54 is configured to detect a first inter-vehicle distance D1. The first inter-vehicle distance D1 is the distance between a preceding vehicle 102 and the motorcycle 1 in the vehicle front-rear direction (FB direction) of the motorcycle 1. The first inter-vehicle distance D1 may be the distance between a predetermined part of a preceding vehicle 102 and a predetermined part of the motorcycle 1 in the vehicle front-rear direction (FB direction) of the motorcycle 1. The first inter-vehicle distance D1 may be the distance between a predetermined part of a preceding vehicle 102 and a predetermined part of the motorcycle 1 in the traveling direction of the motorcycle 1. The first inter-vehicle distance D1 may be the distance between a predetermined part of a preceding vehicle 102 and a predetermined part of the motorcycle 1 in the front-rear direction of the lane 100. The first inter-vehicle distance D1 may be the shortest distance between a predetermined part of a preceding vehicle 102 and a predetermined part of the motorcycle 1. The predetermined part of the motorcycle 1 may be the front wheel unit 2 or the front sensing unit 41. The predetermined part of the preceding vehicle 102 may be the trailing end of the preceding vehicle 102. The predetermined part of the preceding vehicle 102 may be different in accordance with the relative position of the preceding vehicle 102 relative to the motorcycle 1.

The preceding vehicle information calculation unit 54 is configured to detect the first inter-vehicle distance D based on a result of sensing by the front sensing unit 41. A specific example of detection of the first inter-vehicle distance D1 when the front sensing unit 41 is a millimeter wave radar or a microwave radar will be described. The front sensing unit 41 is configured to emit radio waves in many different directions. The preceding vehicle information calculation unit 54 is configured to detect the shortest distance between a preceding vehicle 102 and the front sensing unit 41 based on a time from the emission of radio waves from the front sensing unit 41 to the reach of a reflected wave reflected on the preceding vehicle 102 to the front sensing unit 41. The detected distance may be used as the first inter-vehicle distance D1. When the first inter-vehicle distance D1 is the distance in the vehicle front-rear direction, the position of the preceding vehicle 102 relative to the motorcycle 1 is specified based on the direction of an incident wave or a reflected wave, and the first inter-vehicle distance D1 is calculated. The preceding vehicle information calculation unit 54 calculates the distance D1 in a similar manner, when the front sensing unit 41 is a laser radar, an ultrasonic sensor, an acoustic sensor, an infrared sensor, a radio wave/electric field sensor, a magnetic sensor, or a range image sensor. When the front sensing unit 41 is a monocular camera, the preceding vehicle information calculation unit 54 specifies a distance measurement object in an image and calculates the distance D1 based on trigonometry. When the front sensing unit 41 is compound-eye camera, the distance D1 is calculated based on the parallax of the two eyes.

The preceding vehicle information calculation unit 54 may detect the first inter-vehicle distance D1 based on the positional information of the motorcycle 1 and the positional information of the preceding vehicle 102 detected by the wireless communication apparatus 42.

The preceding vehicle information calculation unit 54 is configured to detect a first offset distance P1. The first offset distance P1 is the distance between the center of the motorcycle 1 and the center of a preceding vehicle 102 in the vehicle left-right direction (LR direction) of the motorcycle 1. The first offset distance P1 may be the distance between the center of the motorcycle 1 and the center of the preceding vehicle 102 in the lane left-right direction (LLRL direction). The first offset distance P1 may be the distance between the center of the motorcycle 1 and the center of the preceding vehicle 102 in a direction orthogonal to the traveling direction of the motorcycle 1. The position in the motorcycle 1, which serves as a basis for the first offset distance P1, may be a position other than the center. The position in the preceding vehicle 102, which serves as a basis for the first offset distance P1, may be a position other than the center.

The preceding vehicle information calculation unit 54 may detect the first offset distance P1 based on a result of sensing by the front sensing unit 41. A specific example of the detection of the first offset distance P1 is similar to the specific example of the detection of the first inter-vehicle distance D1 when the first inter-vehicle distance D1 is the distance in the vehicle front-rear direction. The preceding vehicle information calculation unit 54 may detect the first offset distance P1 based on the positional information of the motorcycle 1 and the positional information of the preceding vehicle 102 detected by the wireless communication apparatus 42.

The preceding vehicle information calculation unit 54 is configured to detect the width w1 of the preceding vehicle 102 in the lane left-right direction (LLRL direction). The preceding vehicle information calculation unit 54 is configured to detect the width w1 based on a result of sensing by the front sensing unit 41. The width w1 may be the width of the preceding vehicle 102 in the vehicle left-right direction (LR direction) of the motorcycle 1. When the preceding vehicle 102 is a leaning vehicle, the width w1 may always be the width of the preceding vehicle 102 in an upright state, irrespective of the leaning of the preceding vehicle 102. Alternatively, when the preceding vehicle 102 is a leaning vehicle, the width w1 may be changed in accordance with the leaning of the preceding vehicle 102. This width w1 may or may not encompass the driver of the preceding vehicle 102.

The preceding vehicle information calculation unit 54 is configured to detect the position of the preceding vehicle 102 in the lane 100 in the lane left-right direction (LLRL direction). A specific example of the detection of the position of the preceding vehicle 102 in the lane 100 in the lane left-right direction (LLRL direction) is similar to the specific example of the detection of the position of the motorcycle 1 described in relation to the in-lane left-right position calculation unit 52. For example, the distances d2a and d2b (see FIG. 7 and FIG. 8) between the edges of the lane 100 and a predetermined part of the preceding vehicle 102 in the lane left-right direction (LLRL direction). The preceding vehicle information calculation unit 54 is configured to detect the position of the preceding vehicle 102 in the lane 100 in the lane left-right direction (LLRL direction), based on a result of sensing by the front sensing unit 41. The preceding vehicle information calculation unit 54 may detect the position based on a result of sensing by the front sensing unit 41 and map data which is either stored in the storage unit 49 or received by the wireless communication apparatus 42.

The preceding vehicle information calculation unit 54 is configured to detect the relative speed RV2_{FB} and the relative acceleration RA2_{FB} of the preceding vehicle 102 relative to the motorcycle 1 in the vehicle front-rear direction (FB direction) of the motorcycle 1. The preceding vehicle information calculation unit 54 is configured to detect the relative speed RV2_{FB} and the relative acceleration RA2_{FB} based on a result of sensing by the front sensing unit 41. The preceding vehicle information calculation unit 54 may detect the relative speed RV2_{LR} and the relative acceleration RA2_{LR} of the preceding vehicle 102 relative to the motorcycle 1 in the vehicle left-right direction (LR direction) of the motorcycle 1.

The preceding vehicle information calculation unit 54 may detect the speed V2_{FB} of the preceding vehicle 102 in the vehicle front-rear direction (FB direction) of the motorcycle 1, based on the relative speed RV2_{FB} of the preceding vehicle 102 and the speed V1_{FB} of the motorcycle 1. The preceding vehicle information calculation unit 54 may detect the acceleration A2_{FB} of the preceding vehicle 102 in the vehicle front-rear direction (FB direction) of the motorcycle 1, based on the relative acceleration RA2_{FB} of the preceding vehicle 102 and the acceleration A1_{FB} of the motorcycle 1.

The wireless communication apparatus 42 may receive information of the traveling direction of the preceding vehicle 102 and the speed and/or acceleration of the preceding vehicle 102 in the traveling direction of the preceding vehicle 102, by means of vehicle-to-vehicle communication or road-to-vehicle communication. Based on these sets of information received by the wireless communication apparatus 42, the preceding vehicle information calculation unit 54 may detect the speed V2_{FB} and/or the acceleration A2_{FB} of the preceding vehicle 102 in the vehicle front-rear direction (FB direction) of the motorcycle 1 and the speed V2_{LR} and/or the acceleration A2_{LR} of the preceding vehicle 102 in the vehicle left-right direction (LR direction) of the motorcycle 1. The preceding vehicle information calculation unit 54 may detect the relative speed RV2_{FB} based on the detected speed V2_{FB} of the preceding vehicle 102 in the vehicle front-rear direction (FB direction) of the motorcycle 1 and the speed V1_{FB} of the motorcycle 1 in the vehicle front-rear direction (FB direction). The relative acceleration RA2_{FB}, the relative speed RV2_{LR}, and the relative acceleration RA2_{LR} may be detected in a similar manner.

When the preceding vehicle 102 is a leaning vehicle, the preceding vehicle 102 includes a vehicle body frame which leans rightward of the vehicle 102 when turning right and leans leftward of the vehicle 102 when turning left. The preceding vehicle information calculation unit 54 is configured to detect the leaning of the vehicle body frame of the preceding vehicle 102 relative to the up-drown direction. To be more specific, the preceding vehicle information calculation unit 54 is configured to detect at least one of a tilt angle 02, a tilt angular speed ω2, or a tilt angular acceleration α2 of the vehicle body frame of the preceding vehicle 102 relative to the up-down direction. The preceding vehicle information calculation unit 54 is configured to detect the tilt angle 02, the tilt angular speed ω2, and the tilt angular acceleration α2 based on a result of sensing by the front sensing unit 41. The tilt angle θ2 may be a tilt angle of the vehicle body frame of the preceding vehicle 102 in the vehicle left-right direction (LR direction) of the motorcycle 1 or a tilt angle of the vehicle body frame of the preceding vehicle 102 in the vehicle left-right direction of the preceding vehicle 102. The same applies to the tilt angular speed ω2 and the tilt angular acceleration α2 Alternatively, the wireless communication apparatus 42 receives information of the tilt angle 02, the tilt angular speed ω2, and the tilt angular acceleration α2 by means of vehicle-to-vehicle communication or road-to-vehicle communication.

The neighboring lane vehicle information calculation unit 55 is configured to detect a second inter-vehicle distance D2. The second inter-vehicle distance D2 is the distance between a neighboring lane vehicle 103 and the motorcycle 1 in the vehicle front-rear direction (FB direction) of the motorcycle 1. The second inter-vehicle distance D2 may be the distance between a predetermined part of a neighboring lane vehicle 103 and a predetermined part of the motorcycle 1 in the vehicle front-rear direction (FB direction) of the motorcycle 1. The second inter-vehicle distance D2 may be the distance between a predetermined part of a neighboring lane vehicle 103 and a predetermined part of the motorcycle 1 in the traveling direction of the motorcycle 1. The second inter-vehicle distance D2 may be the distance between a predetermined part of a neighboring lane vehicle 103 and a predetermined part of the motorcycle 1 in the front-rear direction of the lane 100. The second inter-vehicle distance D2 may be the shortest distance between a predetermined part of a neighboring lane vehicle 103 and a predetermined part of the motorcycle 1. The predetermined part of the motorcycle 1 may be the front wheel unit 2 or the front sensing unit 41. The predetermined part of the neighboring lane vehicle 103 may be the trailing end of the neighboring lane vehicle 103. The predetermined part of the neighboring lane vehicle 103 may be different in accordance with the position of the neighboring lane vehicle 103 relative to the motorcycle 1. The neighboring lane vehicle information calculation unit 55 is configured to detect the second inter-vehicle distance D2 based on a result of sensing by the front sensing unit 41. The neighboring lane vehicle information calculation unit 55 may detect the second inter-vehicle distance D2 based on the positional information of the motorcycle 1 and the positional information of the neighboring lane vehicle 103 detected by the wireless communication apparatus 42.

The neighboring lane vehicle information calculation unit 55 is configured to detect a second offset distance P2. The second offset distance P2 is the distance between the center of the motorcycle 1 and the center of a neighboring lane vehicle 103 in the vehicle left-right direction (LR direction) of the motorcycle 1. The second offset distance P2 may be the distance between the center of the motorcycle 1 and the center of the neighboring lane vehicle 103 in the lane left-right direction ((LLRL direction). The second offset distance P2 may be the distance between the center of the motorcycle 1 and the center of the neighboring lane vehicle 103 in a direction orthogonal to the traveling direction of the motorcycle 1. The position in the motorcycle 1, which serves as a basis for the second offset distance P2, may be a part other than the center. The position in the neighboring lane vehicle 103, which serves as a basis for the second offset distance P2, may be a part other than the center.

The neighboring lane vehicle information calculation unit 55 is configured to detect the second offset distance P2 based on a result of sensing by the front sensing unit 41. The neighboring lane vehicle information calculation unit 55 may detect the second offset distance P2 based on the positional information of the motorcycle 1 and the positional information of the neighboring lane vehicle 103 detected by the wireless communication apparatus 42.

The neighboring lane vehicle information calculation unit 55 is configured to detect the width w2 of the neighboring lane vehicle 103 in the lane left-right direction (LLRL direction). The neighboring lane vehicle information calculation unit 55 is configured to detect the width w2 based on a result of sensing by the front sensing unit 41. The width w2 may be the width of the neighboring lane vehicle 103 in the vehicle left-right direction (LR direction) of the motorcycle 1. When the neighboring lane vehicle 103 is a leaning vehicle, the width w2 may always be the width of the neighboring lane vehicle 103 in an upright state, irrespective of the leaning of the neighboring lane vehicle 103. When the neighboring lane vehicle 103 is a leaning vehicle, the width w2 may be changed in accordance with the leaning of the neighboring lane vehicle 103. This width w2 may or may not encompass the driver of the neighboring lane vehicle 103.

The neighboring lane vehicle information calculation unit 55 is configured to detect the relative speed RV3_{FB} and the relative acceleration RA3_{FB} of the neighboring lane vehicle 103 relative to the motorcycle 1 in the vehicle front-rear direction (FB direction) of the motorcycle 1. The neighboring lane vehicle information calculation unit 55 is configured to detect the relative speed RV3_{FB} and the relative acceleration RA3_{FB} based on a result of sensing by the front sensing unit 41.

The neighboring lane vehicle information calculation unit 55 may detect the speed V3_{FB} of the neighboring lane vehicle 103 in the vehicle front-rear direction (FB direction) of the motorcycle 1, based on the relative speed RV3_{FB} of the neighboring lane vehicle 103 and the speed V1_{FB} of the motorcycle 1. The neighboring lane vehicle information calculation unit 55 may detect the acceleration A3_{FB} of the neighboring lane vehicle 103 in the vehicle front-rear direction (FB direction) of the motorcycle 1, based on the relative acceleration RA3_{FB} of the neighboring lane vehicle 103 and the speed A1_{FB} of the motorcycle 1.

The lane information calculation unit 56 is configured to detect the width W (see FIG. 7 and FIG. 8) of the lane 100 in the lane left-right direction (LLRL direction). The lane information calculation unit 56 may detect the width W of the lane 100 based on a result of sensing by the front sensing unit 41. The lane information calculation unit 56 may detect the width W of the lane 100 based on a GNSS signal which is received by the wireless communication apparatus 42 and map data which is either stored in the storage unit 49 or received by the wireless communication apparatus 42.

The lane information calculation unit 56 is configured to detect the direction of vehicle flow of the left lane 101L and the right lane 101R. The lane information calculation unit 56 may detect the direction of vehicle flow of a neighboring lane 101 based on a result of sensing by the front sensing unit 41. For example, the lane information calculation unit 56 may detect the direction of vehicle flow of a neighboring lane 101 based on the relative speed RV3_{FB} detected based on a result of sensing by the front sensing unit 41. The lane information calculation unit 56 may detect the direction of vehicle flow of a neighboring lane 101 based on a GNSS signal which is received by the wireless communication apparatus 42 and map data which is either stored in the storage unit 49 or received by the wireless communication apparatus 42. The lane information calculation unit 56 determines whether roads are right-hand traffic or left-hand traffic, based on the direction of vehicle flow of the lane 100 and the direction of vehicle flow of a neighboring lane 101. That is, when the direction of vehicle flow of the left lane 101L is opposite to the direction of vehicle flow of the lane 100, the lane information calculation unit 56 determines that the road is right-hand traffic. When the direction of vehicle flow of the right lane 101R is opposite to the direction of vehicle flow of the lane 100, the lane information calculation unit 56 determines that the road is left-hand traffic.

In addition to the width W of the lane 100 and the direction of vehicle flow of the neighboring lane 101, the lane information calculation unit 56 may detect, by means of a calculation process or the like, information regarding the lane 100. The information regarding the lane 100, the information being detected by the lane information calculation unit 56, is referred to as lane information The lane information includes, for example, information regarding curves, corners, intersections, junctions, branches, traffic lights, and crossings of the lane 100. For example, the information regarding curves may include not only the positions of the curves but also curvatures and visibility at each curve. Information other than the positions is also included in each of the sets of information regarding corners, intersections, junctions, and branches.

The lane information calculation unit 56 may detect the lane information based on a result of sensing by the front sensing unit 41. The lane information calculation unit 56 may detect the lane information based on a GNSS signal which is received by the wireless communication apparatus 42 and map data which is either stored in the storage unit 49 or received by the wireless communication apparatus 42.

The wireless communication apparatus 42 may receive the lane information by means of, for example, road-to-vehicle communication. The lane information received by the wireless communication apparatus 42 may include the width W of the lane 100 and the direction of vehicle flow of a neighboring lane 101. The lane information received by the wireless communication apparatus 42 may include, for example, information regarding curves, coners, intersections, junctions, branches, traffic lights, and crossings. The lane information received by the wireless communication apparatus 42 may include traffic control information such as speed limit and traffic jam information. When the wireless communication apparatus 42 is configured to receive the lane information, the lane information calculation unit 56 may be omitted.

The in-lane left-right position calculation unit 52 is included in an in-lane left-right position information acquisition unit of the present teaching. The in-lane left-right position calculation unit 52 is included in the in-lane left-right position information acquisition unit 22 shown in FIG. 1. When the in-lane left-right position calculation unit 52 detects the position of the motorcycle 1 in the lane 100 in the lane left-right direction (LLRL direction) based on a result of sensing by the front sensing unit 41, the front sensing unit 41 may also be included in the in-lane left-right position information acquisition unit of the present teaching. In this case, the front sensing unit 41 may function as both the sensing unit 21 and the in-lane left-right position information acquisition unit 22 shown in FIG. 1. When the in-lane left-right position calculation unit 52 detects the above-described position based on information received by the wireless communication apparatus 42, the wireless communication apparatus 42 may also be included in the in-lane left-right position information acquisition unit of the present teaching. The front sensing unit 41 is included in the in-lane left-right position information acquisition unit 22. When the in-lane left-right position calculation unit 52 detects the above-described position based on information stored in the storage unit 49, the storage unit 49 may also be included in the in-lane left-right position information acquisition unit of the present teaching.

The front sensing unit 41 and the preceding vehicle information calculation unit 54 are included in a preceding vehicle information detection unit of the present teaching. When the preceding vehicle information calculation unit 54 uses information received by the wireless communication apparatus 42 for the detection of information regarding the preceding vehicle 102, the wireless communication apparatus 42 may also be included in an obliquely-neighboring vehicle information detection unit of the present teaching.

When the lane information calculation unit 56 detects the lane information, the lane information calculation unit 56 is included in a lane information detection unit of the present teaching. When the lane information calculation unit 56 uses a result of sensing by the front sensing unit 41 for the detection of the lane information, the front sensing unit 41 may also be included in the lane information detection unit of the present teaching. When the lane information calculation unit 56 uses information received by the wireless communication apparatus 42 for the detection of the lane information, the wireless communication apparatus 42 may also be included in the lane information detection unit of the present teaching. When the wireless communication apparatus 42 receives the lane information, the wireless communication apparatus 42 is equivalent to the lane information detection unit of the present teaching.

### <Control by Active Driving Assist Control Unit 57>

When the driving assist mode or the autonomous driving mode is selected, the active driving assist control unit 57 controls the active driving assist unit 23 to actively assist the driver. The active driving assist unit 23 includes an acceleration controller 24 and a left-right movement assist device 25.

The acceleration controller 24 is configured to control the rotation of the front wheel unit 2 and the rear wheel unit 3 so as to control the acceleration of the motorcycle 1 in the traveling direction. The acceleration controller 24 includes the engine unit 8 and the brake mechanism 19. The engine unit 8 is configured to apply a driving force to the rear wheel unit 3. The brake mechanism 19 is configured to apply a braking force to each of the front wheel unit 2 and the rear wheel unit 3.

The left-right movement assist device 25 is configured to provide assist for the movement of the motorcycle 1 in the vehicle left-right direction (LR direction). The left-right movement assist device 25 may include a notification device which is configured to perform notification to prompt the driver to move the motorcycle in the vehicle left-right direction (LR direction). The notification device is, for example, the display 14. The notification device may perform notification by sound or vibration. The left-right movement assist device 25 may include a left-right movement device which is configured to automatically move the motorcycle 1 in the vehicle left-right direction (LR direction). The left-right movement device includes a motor 17 (see FIG. 4) by which the steering shaft is rotated, the engine unit 8, and the brake mechanism 19. When the motorcycle 1 is turning, the left-right movement assist device 25 is able to move the motorcycle 1 in the vehicle left-right direction (LR direction) by controlling the front brake 2a, the rear brake 3a, or the throttle valve 18. In other words, during the turning, the acceleration controller 24 functions as the left-right movement assist device 25 (left-right movement device).

The left-right movement device may include the front suspension 15 or the rear suspension 16. The left-right movement device may move the motorcycle 1 in the vehicle left-right direction by controlling the balance between the left and the right of the front suspension 15 or the rear suspension 16. The left-right movement device may include a flywheel or a counter weight attached to the crankshaft. The left-right movement device may move the motorcycle 1 in the vehicle left-right direction (LR direction) by controlling the tilt angle θ1 of the motorcycle 1 by means of the flywheel or the counter weight.

The active driving assist device 20 is configured to perform adaptive cruise control (ACC) by which the motorcycle follows a preceding vehicle while the inter-vehicle distance is maintained at a predetermined distance. The adaptive cruise control is alternatively termed auto cruise control or active cruise control. The active driving assist device 20 may perform lane keeping assist control. The lane keeping assist control is driving assist control which causes the motorcycle 1 to run along the lane 100. The active driving assist device 20 may perform automatic brake control which activates brake upon detection of an object or a pedestrian. The active driving assist control unit 57 may perform cruise control by which the vehicle speed is maintained to be constant.

The following will explain the control by the active driving assist control unit 57 with specific examples.

As shown in FIG. 7 and FIG. 8, the active driving assist control unit 57 sets a left edge field 70FL and a right edge field 70FR at a left edge portion and a right edge portion of the lane 100, respectively. The width of the left edge field 70FL in the lane left-right direction (LLRL direction) is referred to as width W70L. The width of the right edge field 70FR in the lane left-right direction (LLRL direction) is referred to as width W70R. The widths W70L and W70R are changed in accordance with a predetermined condition. Each of the widths W70L and W70R may be constant. The widths W70L and W70R may be the widths of the edge fields 70FL and 70FR in the vehicle left-right direction (LR direction). Hereinafter, the edge field 70FR and the edge field 70FL may be collectively termed edge fields 70F. Each of the widths W70L and W70R may be termed width W70 when it is not necessary to distinguish between them. Each edge field 70F is formed of three edge fields 70Fa, 70Fb, and 70Fc. The first edge field 70Fa, the second edge field 70Fb, and the third edge field 70Fc are lined up in this order. Among them, the edge field 70Fa is the closest to the edge of the lane 100. The widths of the first edge field 70Fa, the second edge field 70Fb, and the third edge field 70Fc are set in accordance with the width W70 of the edge field 70F.

The active driving assist control unit 57 controls the active driving assist unit 23 so that the motorcycle 1 does not enter the edge field 70F. In accordance with information regarding the position of the motorcycle 1 in the lane 100 in the lane left-right direction (LLRL direction), the active driving assist control unit 57 controls the active driving assist unit 23 so that the distance between an edge of the lane 100 and the motorcycle 1 in the lane left-right direction is equal to or longer than the width W70. In accordance with the position of the motorcycle 1 in the lane 100 in the lane left-right direction (LLRL direction), the active driving assist control unit 57 controls at least one of the acceleration controller 24 or the left-right movement assist device 25 to actively assist the driver. The active driving assist control unit 57 actively assists the driver by controlling the acceleration controller 24 in accordance with the position of the motorcycle 1 in the lane 100 in the lane left-right direction (LLRL direction). In accordance with the position of the motorcycle 1 in the lane 100 in the lane left-right direction (LLRL direction), the active driving assist control unit 57 assists the movement of the motorcycle 1 in the vehicle left-right direction by controlling the left-right movement assist device 25.

As shown in FIG. 7 and FIG. 8, the active driving assist control unit 57 sets a field 71F which is substantially centered on the preceding vehicle 102 and has a predetermined size. While the field 71F is elliptical in FIG. 7 and FIG. 8, the field 71 F is not limited to this shape. The long axis of the field 71F is in parallel to the vehicle front-rear direction (FB direction) but may be differently oriented. 1/2 of the length of the long axis of the elliptical field 71F is referred to as a length L71_{FB}. 1/2 of the length of the short axis of the elliptical field 71F is referred to as a length L71_{LR}. The length L71_{FB} and the length L71_{LR} are changed in accordance with a predetermined condition. The field 71F is formed of three fields 71Fa, 71Fb, and 71Fc. The first field 71Fa, the second field 71Fb, and the third field 71Fc are lined up in this order. Among them, the first field 71 Fa is the closest to the preceding vehicle 102. The size of each of the first field 71 Fa and the second field 71 Fb is set in accordance with the size of the field 71F. The field 71F may be substantially a rear half of an ellipse centered on the motorcycle 1. This is because only substantially a rear half of the field 71F is used for the driving assist control. The same applies to a later-described field 72F.

The active driving assist control unit 57 performs ACC (Adaptive Cruise Control) by using this field 71F. The active driving assist control unit 57 controls the active driving assist unit 23 so that the motorcycle 1 is in contact with the field 71 F of the preceding vehicle 102. The active driving assist control unit 57 controls the active driving assist unit 23 so that the first inter-vehicle distance D1 is maintained at a predetermined target inter-vehicle distance, while controlling the position of the motorcycle 1 in the left-right direction of the lane 100.

For example, the active driving assist control unit 57 may monitor variation of the first inter-vehicle distance D1 over time, and control the active driving assist unit 23 when the motorcycle 1 enters or leaves the field 71F. For example, the active driving assist control unit 57 may control the active driving assist unit 23 based on the first inter-vehicle distance D1 at a certain point of time so that the motorcycle 1 makes contact with the field 71F after t seconds elapse. In this case, the active driving assist unit 23 is controlled so that the acceleration and the jerk during the elapse of t seconds are at desired values.

The active driving assist control unit 57 controls the motorcycle 1 so that the motorcycle 1 is in contact with the field 71F of the preceding vehicle 102 but does not enter the edge field 70F. In other words, the active driving assist control unit 57 controls the active driving assist unit 23 so that the first inter-vehicle distance D1 is adjusted based on the first inter-vehicle distance D1 detected by the preceding vehicle information calculation unit 54 and the position of the motorcycle 1 in the lane 100 in the lane left-right direction (LLRL direction). To be more specific, the active driving assist control unit 57 controls the active driving assist unit 23 so that the first inter-vehicle distance D1 is adjusted based on the first inter-vehicle distance D1 and the first offset distance P1 detected by the preceding vehicle information calculation unit 54 and the position of the motorcycle 1 in the lane 100 in the lane left-right direction (LLRL direction). In this way, when the preceding vehicle 102 is detected based on a result of sensing by the front sensing unit 41, the active driving assist control unit 57 controls the active driving assist unit 23 to actively assist the driver based on the position of the motorcycle 1 in the lane 100 in the lane left-right direction (LLRL direction), the position being detected by the in-lane left-right position calculation unit 52.

As shown in FIG. 7 and FIG. 8, when a neighboring lane vehicle 103 running in a neighboring lane 101 which is identical with the lane 100 in the direction of vehicle flow, the active driving assist control unit 57 sets a field 72F which is substantially centered on the neighboring lane vehicle 103. While the field 72F is elliptical in FIG. 7 and FIG. 8, the field 72F is not limited to this shape. The long axis of the field 72F is in parallel to the vehicle front-rear direction (FB direction) but may be differently oriented. 1/2 of the length of the long axis of the elliptical field 72F is referred to as a length L72_{FB}. 1/2 of the length of the short axis of the elliptical field 72F is referred to as a length L72_{LR}. The length L72_{FB} and the length L72_{LR} are changed in accordance with a predetermined condition. The field 72F is formed of three fields 72Fa, 72Fb, and 72Fc. The first field 72Fa, the second field 72Fb, and the third field 72Fc are lined up in this order. Among them, the first field 72Fa is the closest to the neighboring lane vehicle 103. The size of each of the first field 72Fa and the second field 72Fb is set in accordance with the size of the field 72F. The active driving assist control unit 57 controls the active driving assist unit 23 so that the motorcycle 1 does not enter the field 72F of the neighboring lane vehicle 103. The active driving assist control unit 57 may set a field which is substantially centered on a neighboring lane vehicle 103 running in a neighboring lane 101 which is opposite to the lane 100 in the direction of vehicle flow.

A position in the motorcycle 1, based on which the positional relations between the motorcycle 1 and the fields 70F, 71F, and 72F are determined, may be the front sensing unit 41 or the front wheel unit 2. In the latter case, for example, a position which is away from the front sensing unit 41 for a predetermined distance in the forward direction (F direction) is assumed as the front end of the front wheel unit 2. Based on this, whether the front wheel unit 2 is in the field is determined. The determination of the positional relation between the edge field 70F and the motorcycle 1 may be based not only on the front wheel unit 2 but also on the rear wheel unit 3.

The following will specifically describe control by the active driving assist control unit 57 using the fields 70F, 71F, and 72F.

When at least a part of the motorcycle 1 enters the edge field 70F, the active driving assist control unit 57 controls the left-right movement assist device 25 in order to cause the motorcycle 1 to leave the edge field 70F. To be more specific, the left-right movement assist device 25 may perform notification to prompt the driver to move the motorcycle 1 in the vehicle left-right direction (LR direction) or may move the motorcycle 1 in the vehicle left-right direction (LR direction).

When at least a part of the motorcycle 1 enters the field 71F of the preceding vehicle 102, the active driving assist control unit 57 controls the acceleration controller 24 in order to cause the motorcycle 1 to leave or to be in contact with the field 71F. To be more specific, for example, the acceleration controller 24 is controlled so that the jerk of the motorcycle 1 in the traveling direction is decreased. Decrease in the jerk indicates either the absolute value of positive jerk is decreased or the absolute value of negative jerk is increased. When this control is performed, the acceleration of the motorcycle 1 in the traveling direction may be positive, negative, or zero. The active driving assist control unit 57 performs control so that the opening degree of the throttle valve 18 is decreased. As a result, the output of the engine main body 8a is decreased and hence the acceleration of the motorcycle 1 is decreased. In other words, the motorcycle 1 accelerates while the acceleration decreases or deaccelerates. The active driving assist control unit 57 may control the output of the engine main body 8a by changing a parameter which is used for controlling the engine unit 8. The active driving assist control unit 57 decreases the output of the engine main body 8a and changes the transmission ratio of the transmission 8b of the engine unit 8 in accordance with the speed V1_{FB}. Furthermore, according to need, the active driving assist control unit 57 controls the front brake driving unit 2b and/or the rear brake driving unit 3b to activate the front brake 2a and/or the rear brake 3a. With this, a braking force is applied to the front wheel unit 2 and/or the rear wheel unit 3, with the result that the motorcycle 1 deaccelerates. Even if the motorcycle 1 is in the field 71F of the preceding vehicle 102, the acceleration controller 24 may be controlled so that the jerk of the motorcycle 1 in the traveling direction increases, as long as the speed V1_{FB} of the motorcycle 1 is lower than the speed V2_{FB} of the preceding vehicle 102. For example, immediately after a preceding vehicle 102 moves to the lane 100 from a neighboring lane 101, the motorcycle 1 may be in the field 71F of the preceding vehicle 102 and at the same time the speed V1_{FB} of the motorcycle 1 may be lower than the speed V2_{FB} of the preceding vehicle 102.

When at least a part of the motorcycle 1 enters the field 71F of the preceding vehicle 102, the active driving assist control unit 57 may control the left-right movement assist device 25 in order to cause the motorcycle 1 to leave or to be in contact with the field 71F. To be more specific, the left-right movement assist device 25 may perform notification to prompt the driver to move the motorcycle 1 in the vehicle left-right direction (LR direction) or may move the motorcycle 1 in the vehicle left-right direction (LR direction).

When at least a part of the motorcycle 1 enters the field 72F of the neighboring lane vehicle 103, the active driving assist control unit 57 controls at least one of the acceleration controller 24 or the left-right movement assist device 25 in order to cause the motorcycle 1 to leave the field 72F. The control method in this case is identical to the control method when the motorcycle 1 enters the field 71F.

When the motorcycle 1 is remote from the field 71F of the preceding vehicle 102, the active driving assist control unit 57 controls the acceleration controller 24 so that the motorcycle 1 comes close to the field 71 F, in accordance with the running situation. To be more specific, for example, the acceleration controller 24 is controlled so that the jerk of the motorcycle 1 in the traveling direction is increased. The speed V1_{FB} of the motorcycle 1, however, must be within a predetermined speed range after the control. When this control is started, the acceleration of the motorcycle 1 in the traveling direction may be positive, negative, or zero. The active driving assist control unit 57 performs control so that the opening degree of the throttle valve 18 is increased. As a result, the output of the engine main body 8a is increased and hence the acceleration of the motorcycle 1 is increased. In other words, the motorcycle 1 deaccelerates while the acceleration increases or accelerates. The active driving assist control unit 57 may control the output of the engine main body 8a by changing a parameter which is used for controlling the engine unit 8. The active driving assist control unit 57 increases the output of the engine main body 8a and changes the transmission ratio of the transmission 8b of the engine unit 8 in accordance with the speed. Even if the motorcycle 1 is remote from the field 71F of the preceding vehicle 102, the acceleration controller 24 may be controlled so that the jerk of the motorcycle 1 in the traveling direction decreases, as long as the speed V1_{FB} of the motorcycle 1 is higher than the speed V2_{FB} of the preceding vehicle 102. For example, immediately after a preceding vehicle 102 moves to the lane 100 from a neighboring lane 101, the motorcycle 1 may be remote from the field 71F of the preceding vehicle 102 and at the same time the speed V1_{FB} of the motorcycle 1 may be higher than the speed V2_{FB} of the preceding vehicle 102.

When the motorcycle 1 is remote from the field 71F of the preceding vehicle 102, the active driving assist control unit 57 may control the left-right movement assist device 25 so that the motorcycle 1 comes close to the field 71F, in accordance with the running situation. To be more specific, the left-right movement assist device 25 may perform notification to prompt the driver to move the motorcycle 1 in the vehicle left-right direction (LR direction) or may move the motorcycle 1 in the vehicle left-right direction (LR direction).

In addition to the above, the active driving assist control unit 57 may perform control other than those described above, in order to cause the motorcycle 1 to leave or to be in contact with the field 70F, 71F, or 72F. The active driving assist control unit 57 may perform control other than those described above, in order to cause the motorcycle 1 to come close to the field 71F. For example, the damping force generated at the front suspension 15 or the rear suspension 16 may be controlled. Alternatively, a notification which prompts deceleration or acceleration may be made.

The following will describe conditions based on which the width W70 of the edge field 70F set at an edge portion of the lane 100 is changed will be described. It is noted that the conditions for change are not limited to the following conditions.

The active driving assist control unit 57 may change the width W70 of the edge field 70F based on the lane information detected by the lane information calculation unit 56 or the wireless communication apparatus 42. A specific example of this is described below.

The active driving assist control unit 57 may change the width W70 of the edge field 70F in accordance with the width W of the lane 100. For example, the width W70 of the edge field 70F may be increased as the width W of the lane 100 is increased.

The active driving assist control unit 57 may change the width W70L of the left edge field 70FL in accordance with the direction of vehicle flow of the left lane 101L. The active driving assist control unit 57 may change the width W70R of the right edge field 70FR in accordance with the direction of vehicle flow of the right lane 101R. The width W70L which is set when the direction of vehicle flow of the left lane 101L is opposite to the direction of vehicle flow of the lane 100 may be longer than the width W70L when the direction of vehicle flow of the left lane 101L is identical with the direction of vehicle flow of the lane 100. The same applies to the right lane 101R. The active driving assist unit 23 is controlled so that the motorcycle 1 does not enter the edge field 70F which is set as described above. To put it differently, the active driving assist control unit 57 controls the active driving assist unit 23 in order to actively assist the driver, based on the direction of vehicle flow of the neighboring lane 101 and the position of the motorcycle 1 in the lane 100 in the lane left-right direction (LLRL direction).

The active driving assist control unit 57 may change the width W70 of the edge field 70F based on the type of a lane mark. The active driving assist control unit 57 may change the width W70 of the edge field 70F based on the width of a road shoulder or a side strip.

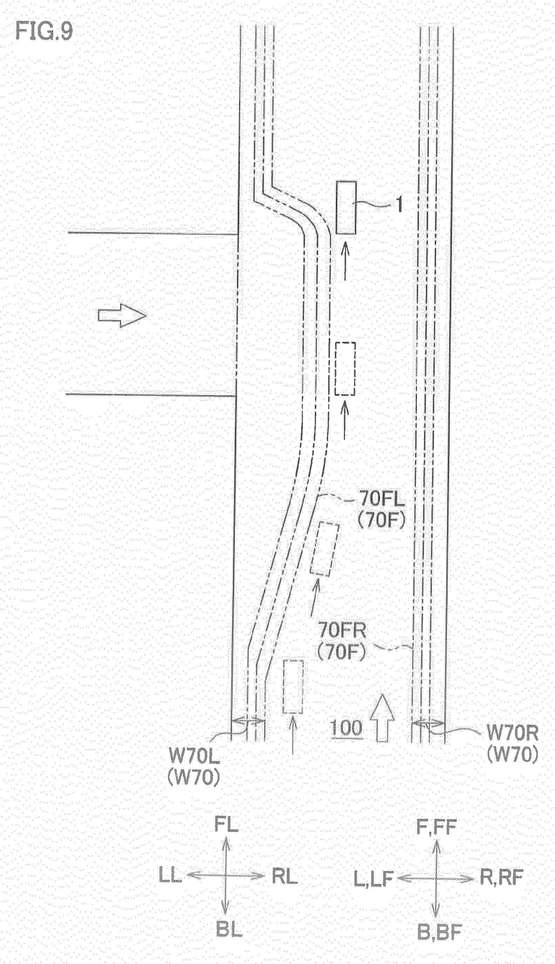

When the lane information calculation unit 56 or the wireless communication apparatus 42 detects an intersection, the active driving assist control unit 57 may change the width W70 of the edge field 70F connected to a lane which intersects the lane 100. For example, in FIG. 9, the left edge field 70FL is connected to the lane intersecting the lane 100. The active driving assist control unit 57 may increase the width W70L of the left edge field 70FL from a position rearward of the intersection in the lane front-rear direction to at least a part in the intersection. In FIG. 9, the increase in the width W70L of the left edge field 70FL ends at around the end of the intersection. Depending on the state of the lane 100 and the state of vehicles around the intersection, the position from which the width W70L of the left edge field 70FL increases may be close to the intersection.

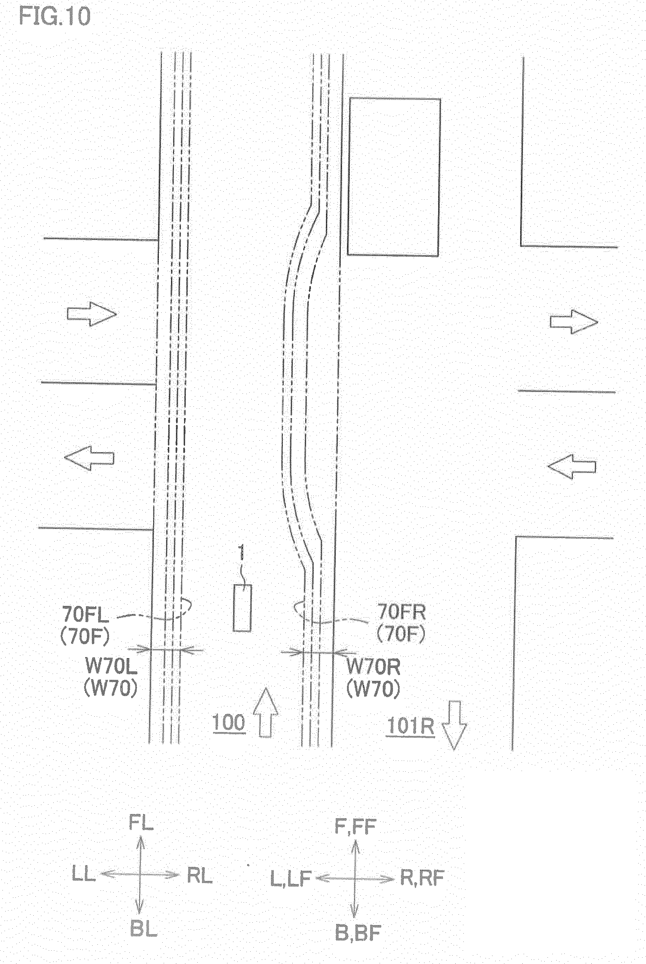

As shown in FIG. 10, for example, when the road is left-hand traffic and a vehicle in the right lane 101R is on standby for turning right, the width W70R of the right edge field 70FR may be long at the intersection. The width W70L of the left edge field 70FL may be constant at the intersection and its vicinities. The width W70L of the left edge field 70FL may be changed as shown in FIG. 9.

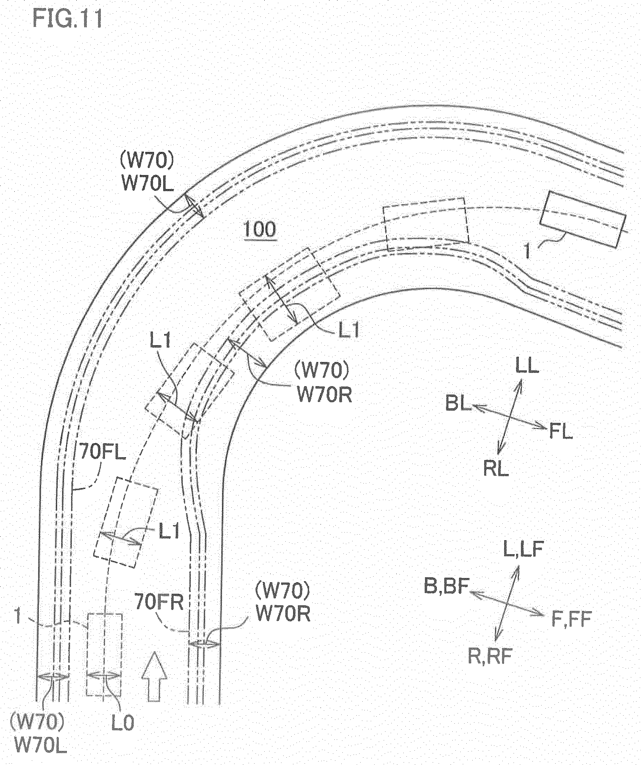

When the lane information calculation unit 56 or the wireless communication apparatus 42 detects a curve in the lane 100, as shown in FIG. 11, for example, the active driving assist control unit 57 may arrange the width W70 of the edge field 70F on the inner side of the curve to be longer than the width W70 of the edge field 70F at a straight part of the lane. This prevents a part of the motorcycle 1 or the driver from jutting out from the lane 100 when the motorcycle 1 leans at a curve and increases in width. The active driving assist control unit 57 may change the width W70 in accordance with curvature of a curve.

When the lane information calculation unit 56 or the wireless communication apparatus 42 detects a curve with low visibility, the active driving assist control unit 57 may further increase the width W70 of the edge field 70F on the inner side of the curve. This allows the driver to comer in a so-called "out-out-in" manner, with sufficient visibility.

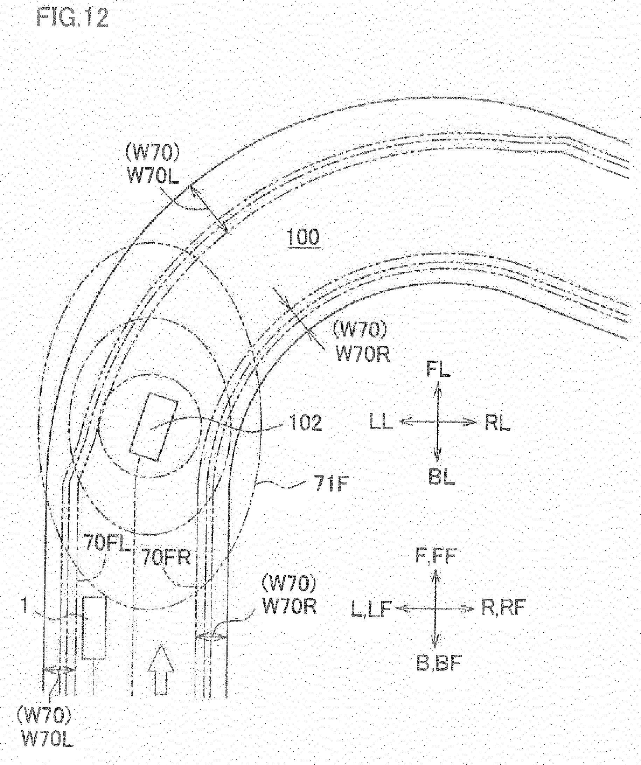

When the lane information calculation unit 56 or the wireless communication apparatus 42 detects no obstacles on the inner side of the curve, as shown in FIG. 12, for example, the active driving assist control unit 57 may arrange the width W70 of the edge field 70F on the inner side of the curve to be substantially identical with the width W70 of the edge field 70F at a straight part of the lane.

As shown in FIG. 12, for example, the active driving assist control unit 57 may increase the width W70 of the edge field 70F on the outer side of the curve. This allows the driver to comer in a so-called "out-in-out" manner. Because the turning radius is long, cornering in a high speed is possible.

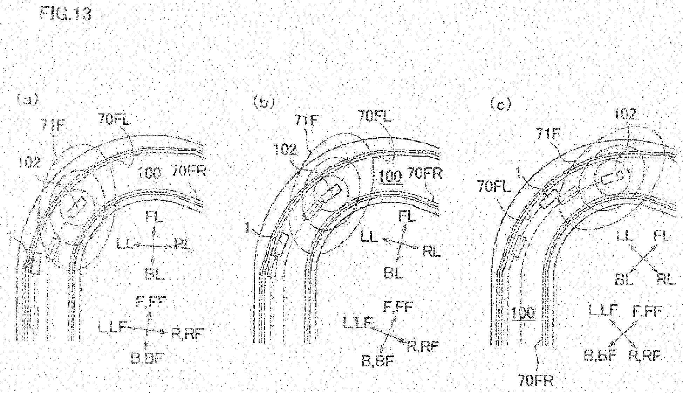

Increase in the width W70 of the edge field 70F on the outer side of the curve results in the following advantage. FIG. 13(a) shows a state immediately after the state shown in FIG. 12. FIG. 13(a) to FIG. 13(c) show how the motorcycle 1 and the preceding vehicle 102 run. In FIG. 13(a) to FIG. 13(c), the traveling lines of the motorcycle 1 and the preceding vehicle 102 are indicated by dotted lines. The traveling line is the locus of the front wheel. When the motorcycle 1 enters the left edge field 70FL, the active driving assist control unit 57 performs control so as to assist rightward movement of the motorcycle 1. As a result, the traveling line of the motorcycle 1 becomes close to the traveling line of the preceding vehicle 102. In other words, the first offset distance P1 is shortened. This facilitates the motorcycle 1 to enter the field 71F of the preceding vehicle 102. The active driving assist control unit 57, however, controls at least one of the acceleration controller 24 or the left-right movement assist device 25 so that the motorcycle 1 does not enter the field 71F but is in contact with the field 71F. On this account, the first inter-vehicle distance D1 between the motorcycle 1 and the preceding vehicle 102 can be advantageously long. In this way, driving assist further in conformity with the driver's feeling can be realized.

In this way, the size of the edge field 70F is set in accordance with the lane information detected by the lane information calculation unit 56 or the wireless commmnication apparatus 42. The active driving assist unit 23 is controlled so that the motorcycle 1 does not enter the edge field 70F. In other words, the active driving assist control unit 57 controls the active driving assist unit 23 to actively assist the driver, based on the lane information detected by the lane information calculation unit 56 or the wireless communication apparatus 42 and the position of the motorcycle 1 in the lane 100 in the lane left-right direction (LLRL direction).

When there is an obstacle such as a parked car or a construction site forward of (FL direction) the motorcycle 1 in the lane 100, the edge fields of two lanes may be connected to prompt the motorcycle 1 to change the lane. For example, when moving to the right lane 101R, in some circumstances, it may be preferable for the motorcycle 1 to turn left and then turn right. The width W70 of the edge field 70F may be changed to prompt the driver to drive in this way.

The active driving assist control unit 57 may change the width W70 of the edge field 70F in accordance with the tilt angle θ1 or the tilt angular speed ω1 of the motorcycle 1. For example, the width W70R of the right edge field 70FR is increased as the motorcycle 1 leans rightward and the tilt angle θ1 increases. The active driving assist unit 23 is controlled so that the motorcycle 1 does not enter the field 70F which is set as described above. In other words, the active driving assist control unit 57 controls the active driving assist unit 23 to actively assist the driver, based on the tilt angle θ1 or the tilt angular speed ω1 of the motorcycle 1 and the position of the motorcycle 1 in the lane 100 in the lane left-right direction (LLRL direction). The active driving assist control unit 57 may change the width W70 of the edge field 70F in accordance with at least one of the tilt angle 02, the tilt angular speed ω2, or the tilt angular acceleration α2 of the preceding vehicle 102

The active driving assist control unit 57 may change the width W70 of the edge field 70F in accordance with the speed V1_{FB} and/or the acceleration A1_{FB} of the motorcycle 1 in the vehicle front-rear direction (FB direction). The active driving assist unit 23 is controlled so that the motorcycle 1 does not enter the field 70F which is set as described above. In other words, the active driving assist control unit 57 controls the active driving assist unit 23 to actively assist the driver, based on at least one of the speed V1_{FB} or the acceleration A1_{FB} of the motorcycle 1 in the vehicle front-rear direction (FB direction) and the position of the motorcycle 1 in the lane 100 in the lane left-right direction (LLRL direction).

The active driving assist control unit 57 may change the width W70 of the edge field 70F in accordance with the speed V1_{LR} and/or the acceleration A1_{LR} of the motorcycle 1 in the vehicle left-right direction (LR direction). The active driving assist control unit 57 performs driving assist control so that the motorcycle 1 does not enter the field 70F which is set in this way. In other words, the active driving assist control unit 57 controls the active driving assist unit 23, based on at least one of the speed V1_{LR} or the acceleration A1_{LR} of the motorcycle 1 in the vehicle left-right direction (LR direction) and the position of the motorcycle 1 in the lane 100 in the lane left-right direction (LLRL direction).

The active driving assist control unit 57 may change the width W70 of the edge field 70F in accordance with the relative speed RV3_{FB} and/or the relative acceleration RA3_{FB} of the neighboring lane vehicle 103 relative to the motorcycle 1 in the vehicle front-rear direction (FB direction) of the motorcycle 1.

The active driving assist control unit 57 may change the width W70 of the edge field 70F based on the width of the motorcycle 1 in the lane left-right direction ((LLRL direction) or the vehicle left-right direction (LR direction). The width of the motorcycle 1 in this case may be the upright state width L0, the lean state width L1, or the leaning vehicle width L1v. The lean state width P1 and the leaning vehicle width L1v are calculated by the controller 50 based on the upright state width L0 stored in the storage unit 49 and the tilt angle θ1 detected by the IMU 40.

The active driving assist control unit 57 may change the width W70 of the edge field 70F based on the total length of the motorcycle 1 in the lane front-rear direction (FLBL direction) or the vehicle front-rear direction (FB direction).

The following will describe conditions based on which the lengths L71_{FB} and L71_{LR} of the field 71F of the preceding vehicle 102 are changed. It is noted that the conditions for change are not limited to the following conditions.

The active driving assist control unit 57 changes the lengths L71_{FB} and L71_{LR} of the field 77F in accordance with the speed V1_{FB} and/or the acceleration A1_{FB} of the motorcycle 1 in the vehicle front-rear direction (FB direction). For example, the active driving assist control unit 57 increases the lengths L71_{FB} and L71_{LR} of the field 71F as the speed V1_{FB} and/or the acceleration A1_{FB} increase. The active driving assist control unit 57 may change the lengths L71_{FB} and L71_{LR} of the field 71F of the preceding vehicle 102 in accordance with the speed V1_{LR} and/or the acceleration A1_{LR} of the motorcycle 1 in the vehicle left-right direction (LR direction).

The active driving assist control unit 57 changes the lengths L71_{FB} and L71_{LR} of the field 71F in accordance with the relative speed RV2_{FB} and/or the relative acceleration RA2_{FB} of the preceding vehicle 102 relative to the motorcycle 1 in the vehicle front-rear direction (FB direction) of the motorcycle 1. The active driving assist control unit 57 may change the lengths L71_{FB} and L71_{LR} of the field 71 F in accordance with the speed V2_{FB} and/or the acceleration A2_{FB} of the preceding vehicle 102 in the vehicle front-rear direction (FB direction) of the motorcycle 1. The active driving assist control unit 57 performs driving assist control by using the feld 71F arranged as described above and the edge field 70F. The active driving assist control unit 57 therefore controls the active driving assist unit 23 based on at least one of the relative speed RV2_{FB}, the relative acceleration RA2_{FB}, the speed V2_{FB}, or the acceleration A2_{FB} of the preceding vehicle 102, the first inter-vehicle distance D1, and the position of the motorcycle 1 in the lane 100 in the lane left-right direction.

The active driving assist control unit 57 may change the lengths L71_{FB} and L71_{LR} of the field 71F in accordance with the position of the preceding vehicle 102 in the lane 100 in the lane left-right direction (LLRL direction). The active driving assist control unit 57 performs driving assist control by using the field 71F arranged as described above and the edge field 70F. The active driving assist control unit 57 therefore controls the active driving assist unit 23 based on the position of the preceding vehicle 102 in the lane 100 in the lane left-right direction (LLRL direction), the first inter-vehicle distance D1, and the position of the motorcycle 1 in the lane 100 in the lane left-right direction.

The active driving assist control unit 57 may change the lengths L71_{FB} and L71_{LR} of the field 71F in accordance with the width w1 of the preceding vehicle 102 in the lane left-right direction (LLRL direction). When the width w1 is shorter than a predetermined width, it is determined that the preceding vehicle 102 is likely to be a leaning vehicle. The active driving assist control unit 57 performs driving assist control by using the field 71F arranged as described above and the edge field 70F. The active driving assist control unit 57 therefore controls the active driving assist unit 23 based on the width w1 of the preceding vehicle, the first inter-vehicle distance D1, and the position of the motorcycle 1 in the lane 100 in the lane left-right direction.

The active driving assist control unit 57 may change the lengths L71_{FB} and L71_{LR}. of the field 71F in accordance with the first offset distance P1 between the preceding vehicle 102 and the motorcycle 1. The active driving assist control unit 57 performs driving assist control by using the field 71F arranged as described above and the edge field 70F. The active driving assist control unit 57 therefore controls the active driving assist unit 23 based on the first offset distance P1, the first inter-vehicle distance D1, and the position of the motorcycle 1 in the lane 100 in the lane left-right direction.

The active driving assist control unit 57 may change the lengths L71_{FB} and L71_{LR} of the field 71 F in accordance with the tilt angle θ1 or the tilt angular speed ω1 of the motorcycle 1. The active driving assist control unit 57 may change the lengths L71_{FB} and L71L_{R} of the field 71F in accordance with at least one of the tilt angle 02, the tilt angular speed ω2, or the tilt angular acceleration α2 of the preceding vehicle 102

The active driving assist control unit 57 may change the lengths L71_{FB} and L71_{LR} of the field 71F based on the lane information detected by the lane information calculation unit 56 or the wireless communication apparatus 42.

The active driving assist control unit 57 may change the lengths L71_{FB} and L71_{LR} of the field 71F based on the width of the motorcycle 1 in the lane left-right direction (LLRL direction) or the vehicle left-right direction (LR direction). This width of the motorcycle 1 is identical with the width of the motorcycle 1 which has been described as the condition based on which the size of the edge field 70F is changed. The active driving assist control unit 57 may change the lengths L71_{FB} and L71_{LR} of the field 71F based on the total length of the motorcycle 1 in the lane front-rear direction (FLBL direction) or the vehicle front-rear direction (FF3 direction).

The following will describe conditions based on which the lengths L72_{FB} and L72_{LR} of the field 72F of the neighboring lane vehicle 103 are changed. It is noted that the conditions for change are not limited to the following conditions.

The active driving assist control unit 57 may change the lengths L72_{FB} and L72_{LR} of the field 72F in accordance with the relative speed RV3_{FB} and/or the relative acceleration RA3_{FD} of the neighboring lane vehicle 103 relative to the motorcycle 1 in the vehicle front-rear direction (FB direction) of the motorcycle 1. The active driving assist control unit 57 may change the lengths L72_{FB} and L72_{LR} of the field 72F in accordance with the speed V3_{FB} and/or the acceleration A3_{FB} of the neighboring lane vehicle 103 in the vehicle front-rear direction (FB direction) of the motorcycle 1.

The active driving assist control unit 57 changes the lengths L72_{FB} and L72_{LR} of the field 72F of the neighboring lane vehicle 103 in accordance with the speed V1_{FB} and/or the acceleration A1_{FB} of the motorcycle 1 in the vehicle front-rear direction (FB direction). The active driving assist control unit 57 may change the lengths L72_{FB} and L72_{LR} of the field 72F in accordance with the speed V1_{LR} and/or the acceleration A1_{LR} of the motorcycle 1 in the vehicle left-right direction (LR direction).

The active driving assist control unit 57 may change the lengths L72_{FB} and L72_{LR} of the field 72F in accordance with the width w2 of the neighboring lane vehicle 103 in the lane left-right direction (LLRL direction). The active driving assist control unit 57 may change the lengths L72_{FB} and L72_{LR} of the field 72F in accordance with the second offset distance P2 between the neighboring lane vehicle 103 and the motorcycle 1.

The active driving assist control unit 57 may change the lengths L72_{FB} and L72_{LR} of the field 72F based on the lane information detected by the lane information calculation unit 56 or the wireless communication apparatus 42. For example, the active driving assist control unit 57 may change the lengths L72_{FB} and L72_{LR} of the field 72F in accordance with the direction of vehicle flow of the neighboring lane 101 in which the neighboring lane vehicle 103 runs.

The active driving assist control unit 57 may change the lengths L72_{FB} and L72_{LR} of the field 72F based on the width of the motorcycle 1 in the lane left-right direction (LLRL direction) or the vehicle left-right direction (LR direction). This width of the motorcycle 1 is identical with the width of the motorcycle 1 which has been described as the condition based on which the size of the edge field 70F is changed. The active driving assist control unit 57 may change the lengths L72_{FB} and L72_{LR} of the field 72F based on the total length of the motorcycle 1 in the lane front-rear direction (FLBL direction) or the vehicle front-rear direction (FB direction).

Even if the motorcycle 1 is remote from the field 71F, the active driving assist control unit 57 does not control the motorcycle 1 to come close to the field 71F in some running situations. In other words, the active driving assist control unit 57 determines whether to perform control for actively assisting the driver, in accordance with the running situation.

For example, even if the motorcycle 1 enters the right edge field 70FR, the active driving assist control unit 57 does not perform control to cause the motorcycle 1 to leave the field 70FR as long as the right direction indicator of the motorcycle 1 blinks. When the motorcycle 1 moves rightward and the right direction indicator blinks, the active driving assist control unit 57 controls the active driving assist unit 23 to actively assist the driver, in accordance with at least one of information of the neighboring lane vehicle 103 in the right lane 101R, the position of the motorcycle 1 in the lane 100 in the lane left-right direction (LLRL direction), or the speed V1_{LR} and the acceleration A1_{LR} of the motorcycle 1.

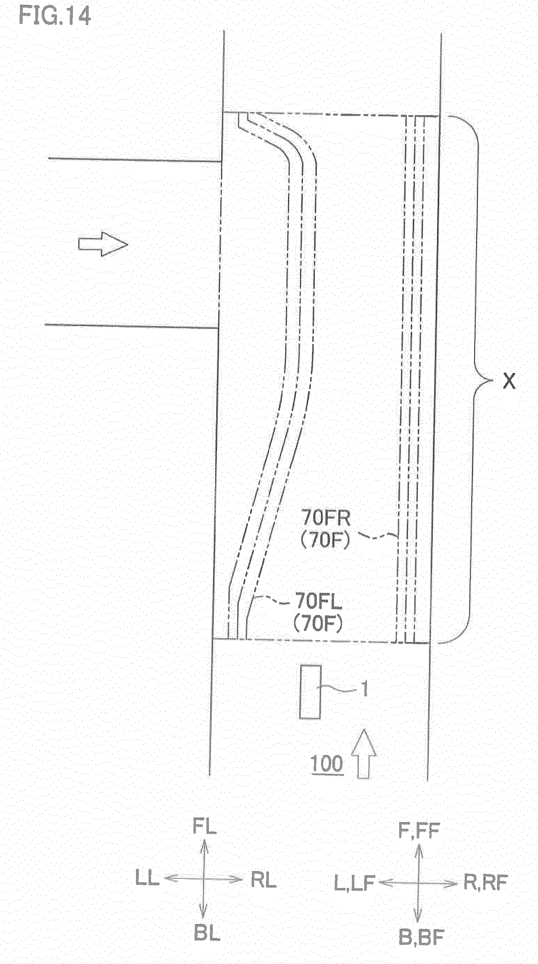

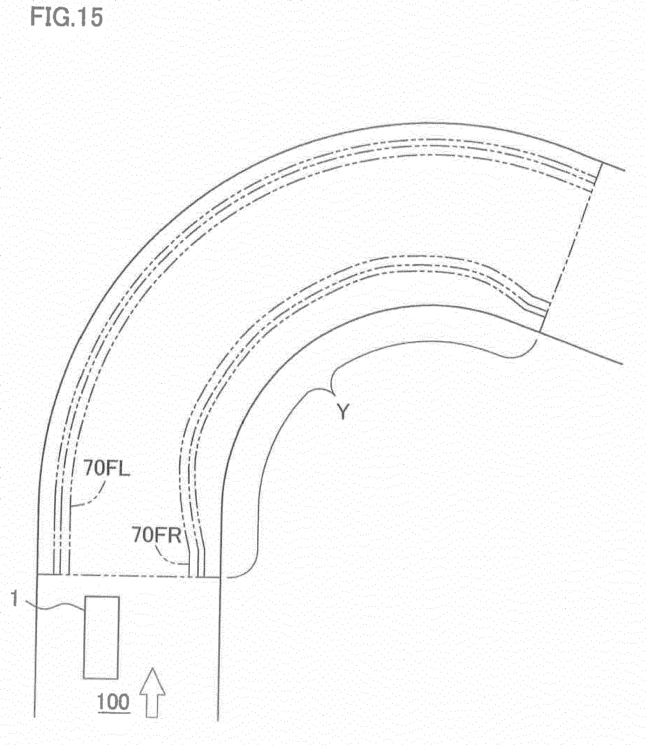

The driving assist control using the edge field 70F may be performed only when the lane 100 satisfies a predetermined condition. A spot where the state of the lane, or the state of the outside of the lane, changes is termed a state change spot. The lane information calculation unit 56 or the wireless communication apparatus 42 detects such a state change spot. The active driving assist control unit 57 preferably performs the driving assist control using the edge field 70F at least in a region including the state change spot. In other words, the active driving assist control unit 57 preferably controls the active driving assist unit 23 at least in a region including the state change spot, based on the position of the motorcycle 1 in the lane 100 in the lane left-right direction. To be more specific, for example, as shown in FIG. 14, driving assist control using the edge field 70F is performed at a region X including an intersection. The driving assist control using the edge field 70F may not be performed in a region which neighbors the region X in the lane front-rear direction. In FIG. 14, the region X including the intersection encompasses a region rearward of the intersection in the lane front-rear direction. Furthermore, as shown in FIG. 15, for example, driving assist control using the edge field 70F is performed at a region Y including a curve. The driving assist control using the edge field 70F may not be performed in a region which neighbors the region Y in the lane front-rear direction. While in FIG. 15 the region Y encompasses a region rearward of the curve in the lane front-rear direction, the region Y may not include this region. While the region Y encompasses a region forward of the curve in the lane front-rear direction, the region Y may not include this region.

When the motorcycle 1 runs at a state change spot or before the motorcycle 1 reaches the state change spot, a change of the traveling line of the motorcycle 1 or a change of the posture of the motorcycle 1 may be required. A "region including a state change spot" is preferably a region where a change of the traveling line of the motorcycle 1 or a change of the posture of the motorcycle 1 is required. For example, a region X including an intersection is a region where the traveling line is expected to change. To be more specific, the traveling line is expected to change toward the center in the lane left-right direction. Furthermore, a region Y including a curve is a region where the posture of the motorcycle 1 is expected to change. To be more specific, the vehicle body frame 4 is expected to lean either before entering the curve or at the first half of the curve. In the region Y including the curve, the vehicle body frame 4 is expected to stand up, too.

When the motorcycle 1 enters the field 70F, 71F, or 72F, the active driving assist control unit 57 determines which one of the acceleration controller 24 and the left-right movement assist device 25 is to be controlled, based on a predetermined condition. When the motorcycle 1 is remote from the field 71F, the active driving assist control unit 57 determines which one of the acceleration controller 24 and the left-right movement assist device 25 is to be controlled, based on a predetermined condition. The phrase "which one of the acceleration controller 24 and the left-right movement assist device 25 is to be controlled" encompasses a case where both of them are to be controlled.

When the motorcycle 1 enters or is remote from the field 71F of the preceding vehicle 102, the active driving assist control unit 57 determines which one of the acceleration controller 24 and the left-right movement assist device 25 is to be controlled, based on at least one of sets of first determination criteria information described below. The first determination criteria information is not limited to the following ones.

The first determination criteria information includes the width w1 of the preceding vehicle 102 in the lane left-right direction (LLRL direction). In this case, the active driving assist control unit 57 controls at least one of the acceleration controller 24 or the left-right movement assist device 25 based on the width w1 of the preceding vehicle 102 in the lane left-right direction (LLRL direction) and the first inter-vehicle distance D1.

The first determination criteria information includes the position of the motorcycle 1 in the lane 100 in the lane left-right direction (LLRL direction). For example, assume that the motorcycle 1 runs at a position close to the left edge of the lane 100 whereas the preceding vehicle 102 runs at a position rightward of the position where the motorcycle 1 runs in the left-right direction of the lane 100. In this circumstance, when the preceding vehicle 102 moves left in the left-right direction of the lane and the motorcycle 1 enters the field 71F of the preceding vehicle 102, the active driving assist control unit 57 may control the acceleration controller 24 to deaccelerate the motorcycle 1. In this example, the active driving assist control unit 57 controls the acceleration controller 24 based on the position of the motorcycle 1 in the lane 100 in the lane left-right direction (LLRL direction) and the first inter-vehicle distance D1. The active driving assist control unit 57 may control at least one of the acceleration controller 24 or the left-right movement assist device 25 based on the position of the motorcycle 1 in the lane 100 in the lane left-right direction (LLRL direction), the first inter-vehicle distance D1, and the first offset distance P1.

The first determination criteria information includes the speed V1_{FB} and/or the acceleration A1_{FB} of the motorcycle 1 in the vehicle front-rear direction (FB direction). In this case, the active driving assist control unit 57 controls at least one of the acceleration controller 24 or the left-right movement assist device 25 based on the first inter-vehicle distance D1 and at least one of the speed VL_{FB} or the acceleration A1_{FB} of the motorcycle 1 in the vehicle front-rear direction (FB direction).

The first determination criteria information includes the speed V1_{LR} and/or the acceleration A1_{LR} of the motorcycle 1 in the vehicle left-right direction (LR direction). In this case, the active driving assist control unit 57 controls at least one of the acceleration controller 24 or the left-right movement assist device 25 based on the first inter-vehicle distance D1 and at least one of the speed V1_{LR} or the acceleration A1_{LR} of the motorcycle 1 in the vehicle left-right direction (LR direction).

The first determination criteria information includes the relative speed RV2_{FB} and/or the relative acceleration RA2_{FB} of the preceding vehicle 102 relative to the motorcycle 1 in the vehicle front-rear direction (FB direction) of the motorcycle 1. In this case, the active driving assist control unit 57 controls at least one of the acceleration controller 24 or the left-right movement assist device 25 based on the first inter-vehicle distance D1 and at least one of the relative speed RV2_{FB} or the relative acceleration RA2_{FB} of the preceding vehicle 102 relative to the motorcycle 1 in the vehicle front-rear direction (FB direction) of the motorcycle 1.

The first determination criteria information includes the relative speed RV2_{LR} and/or the relative acceleration RA2_{LR} of the preceding vehicle 102 relative to the motorcycle 1 in the vehicle left-right direction (LR direction) of the motorcycle 1. In this case, the active driving assist control unit 57 controls at least one of the acceleration controller 24 or the left-right movement assist device 25 based on the first inter-vehicle distance D1 at least one of the relative speed RV2_{LR} or the relative acceleration RA2_{LR} of the preceding vehicle 102 relative to the motorcycle 1 in the vehicle left-right direction (LR direction) of the motorcycle 1.

The first determination criteria information may be whether or not the vehicle body frame 4 of the motorcycle 1 leans. The first determination criteria information may be the tilt angle θ1 and/or the tilt angular speed ω1 of the motorcycle 1. In this case, the active driving assist control unit 57 controls at least one of the acceleration controller 24 or the left-right movement assist device 25 based on the first inter-vehicle distance D1 and at least one of the tilt angle θ1 or the tilt angular speed ω1 of the motorcycle 1.

The first determination criteria information includes at least one of the tilt angle 02, the tilt angular speed ω2, or the tilt angular acceleration α2 of the preceding vehicle 102. In this case, the active driving assist control unit 57 controls at least one of the acceleration controlled 24 or the left-right movement assist device 25 based on the first inter-vehicle distance D1 and at least one of the tilt angle 02, the tilt angular speed ω2, or the tilt angular acceleration α2 of the preceding vehicle 102.

The first determination criteria information includes information regarding the lane 100 detected by the lane information calculation unit 56 or the wireless communication apparatus 42. In this case, the active driving assist control unit 57 controls at least one of the acceleration controller 24 or the left-right movement assist device 25 based on the information regarding the lane 100 and the first inter-vehicle distance D1. For example, when the lane information calculation unit 56 or the wireless communication apparatus 42 detects any of a crossing, a traffic light, and an intersection, the motorcycle 1 is not accelerated even if the motorcycle 1 goes away from the field 71F. In this case, the active driving assist control unit 57 controls the acceleration controller 24 based on the detected information regarding the lane 100 and the first inter-vehicle distance D1.

The first determination criteria information includes the width of the motorcycle 1 in the lane left-right direction (LLRL direction) or the vehicle left-right direction (LR direction). This width of the motorcycle 1 is identical with the width of the motorcycle 1 which has been described as the condition based on which the size of the field 70F is changed. The first determination criteria information includes the total length of the motorcycle 1 in the lane front-rear direction (FLBL direction) or the vehicle front-rear direction (FB direction).

Vehicles are typically deaccelerated before entering a curve. This is particularly the case for leaning vehicles. In this connection, assume that the size of the field 71F is constant irrespective of the speed of the preceding vehicle 102. In such a case, at least a part of the motorcycle 1 tends to enter the field 71 F when the preceding vehicle 102 enters a curve. When at least a part of the motorcycle 1 enters the field 71F, the active driving assist control unit 57 deaccelerates the motorcycle 1 in the same manner as in the preceding vehicle 102, even when the motorcycle 1 runs straight. This causes the driver to feel strange. Actually, however, the active driving assist control unit 57 reduces the size of the field 71F when the preceding vehicle 102 deaccelerates. On this account, the deceleration of the motorcycle 1 by the active driving assist control unit 57 is restrained when the preceding vehicle 102 deaccelerates at the entrance of a curve. In this way, driving assist further in conformity with the driver's feeling can be realized.

In addition to the above, when the lane information calculation unit 56 or the wireless communication apparatus 42. detects a curve in front of the motorcycle 1, the active driving assist control unit 57 may decrease the size of the field 71F. With this arrangement, the deceleration of the motorcycle 1 by the active driving assist control unit 57 is further restrained when the preceding vehicle 102 deaccelerates at the entrance of a curve. In this way, driving assist further in conformity with the driver's feeling can be realized.

In addition to the above, when the lane information calculation unit 56 or the wireless communication apparatus 42 detects a curve in front of the motorcycle 1, the leaning of the preceding vehicle 102 is detected, and the leaning of the vehicle body frame 4 of the motorcycle 1 is not detected, the active driving assist control unit 57 may decrease the size of the field 71F. With this arrangement, the deceleration of the motorcycle 1 by the active driving assist control unit 57 is further restrained when the preceding vehicle 102 deaccelerates at the entrance of a curve.

Vehicles are typically accelerated at the second half of a curve. This is particularly the case for leaning vehicles. In this connection, assume that the size of the field 71F is constant irrespective of the speed of the preceding vehicle 102. In such a case, the motorcycle 1 tends to be away from the field 71F when the preceding vehicle 102 accelerates at the second half of the curve. When the motorcycle 1 is away from the field 71F, the active driving assist control unit 57 accelerates the motorcycle 1 in the same manner as in the preceding vehicle 102, even when the motorcycle 1 is turning. This causes the driver to feel strange. Actually, however, the active driving assist control unit 57 increases the size of the field 71F when the preceding vehicle 102 accelerates. On this account, the acceleration of the motorcycle 1 by the active driving assist control unit 57 is restrained when the preceding vehicle 102 accelerates at the second half of the curve. In this way, driving assist further in conformity with the driver's feeling can be realized.

In addition to the above, when the lane information calculation unit 56 or the wireless communication apparatus 42 detects that the motorcycle 1 is running at a curve, the size of the field 71F may be increased. When the leaning of the preceding vehicle 102 is not detected whereas the leaning of the vehicle body frame 4 of the motorcycle 1 is detected, the active driving assist control unit 57 may increase the size of the field 71F. Whether the preceding vehicle 102 is changing from a leaning state to an upright state, i.e., whether the preceding vehicle 102 is standing up is determined based on a temporal change of the tilt angle 02, the tilt angular speed ω2, or the tilt angular acceleration α2 of the preceding vehicle 102. When it is determined that the preceding vehicle 102 is standing up and the leaning of the vehicle body frame 4 of the motorcycle 1 is detected, the active driving assist control unit 57 may increase the size of the field 71F. By increasing the size of the field 71F in size in this manner, the acceleration of the motorcycle 1 by the active driving assist control unit 57 is further restrained when the preceding vehicle 102 accelerates at the second half of the curve.

When the positive acceleration of the preceding vehicle 102 is considerably high, the motorcycle 1 tends to be away from the enlarged field 71F. When the motorcycle 1 is away from the field 71F, the active driving assist control unit 57 accelerates the motorcycle 1 even when the motorcycle 1 is turning. This causes the driver to feel strange.

For this reason, the active driving assist control unit 57 controls the acceleration controller 24 so that a control range A of the jerk when the leaning of the vehicle body frame 4 of the motorcycle 1 is detected is smaller than the upper limit of a control range B of the jerk when the leaning of the vehicle body frame 4 is not detected but is larger than the lower limit of the control range B. The control range of the jerk is a range from the upper limit of the acceleration controlled by the active driving assist control unit 57 to the lower limit of the acceleration controlled by the active driving assist control unit 57. The control range of the jerk may be a control range of the jerk in the traveling direction or a control range of the jerk in the vehicle front-rear direction of the motorcycle 1. With this arrangement, even if the preceding vehicle 102 accelerates at the second half of the curve and the motorcycle 1 is away from the field 71F, the acceleration of the motorcycle 1 is restrained as long as the motorcycle 1 is turning and leaning. Therefore driving assist further in conformity with the driver's feeling can be realized.

The active driving assist control unit 57 may control the acceleration controller 24 to change the jerk of the motorcycle 1, based on the tilt angle θ1 or the tilt angular speed ω1 of the motorcycle 1. In this case, the active driving assist control unit 57 controls the acceleration controlled 24 based on the detected tilt angle θ1 or tilt angular speed ω1 of the motorcycle 1 and further based on the first inter-vehicle distance D1.

Even if the motorcycle 1 is not in the field 71F of the preceding vehicle 102, the active driving assist control unit 57 may control the left-right movement assist device 25 so that the motorcycle 1 is moved leftward in the lane (LL direction) when the preceding vehicle 102 runs at a position close to the right edge of the lane 100. When the preceding vehicle 102 runs at a position close to the left edge of the lane 100, the left-right movement assist device 25 is controlled to move the motorcycle 1 in the opposite direction. This control may be performed only when the width w1 of the preceding vehicle 102 is shorter than a predetermined width.

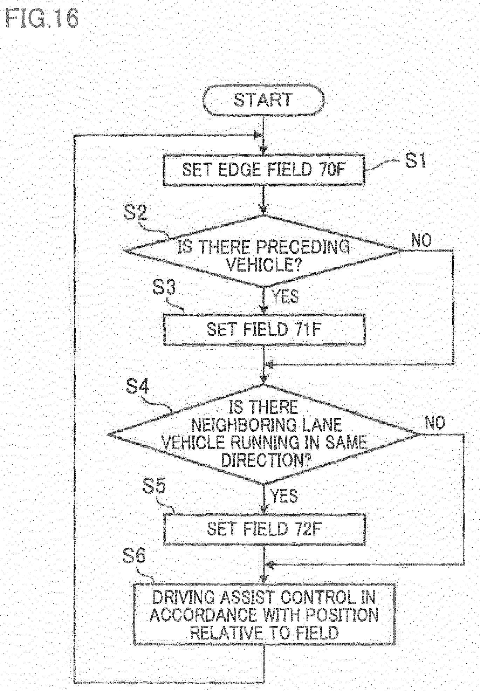

An example of steps of driving assist control by the active driving assist device 20 will be described with reference to a flowchart shown in FIG. 16. To begin with, the active driving assist control unit 57 sets the edge field 70F (step S1). Subsequently, whether the vehicle detection unit 53 detects a preceding vehicle 102 is determined (step S2). When the preceding vehicle 102 is detected (Yes in the step S2), the active driving assist control unit 57 sets the field 71F of the preceding vehicle 102 (step S3). When the preceding vehicle 102 is not detected (No in the step S1), the field 71F is not set. Subsequently, whether the vehicle detection unit 53 detects a neighboring lane vehicle 103 running in a neighboring lane 101 which is identical in the direction of vehicle flow with the lane 100 is determined (step S4). When such a neighboring lane vehicle 103 is detected (Yes in step S4), the active driving assist control unit 57 sets the field 72F of the neighboring lane vehicle 103 (step S5). Based on the positional relationship between the field having been set and the motorcycle 1, the active driving assist control unit 57 performs driving assist control (step S6).

The motorcycle 1 of the specific example of the embodiment of the present teaching has the following characteristics.

The front sensing unit 41 is configured to sense objects in front of the motorcycle 1 in the vehicle front-rear direction. When the preceding vehicle 102 is detected based on a result of sensing by the front sensing unit 41, the active driving assist control unit 57 controls the active driving assist unit 23 to actively assist the driver of the motorcycle 1 having a width variation characteristic, based on information of the position of the motorcycle 1 in the lane 100 in the left-right direction of the lane 100. In a state in which the preceding vehicle 102 is running, driving assist in accordance with the position of the motorcycle 1 in the lane 100 in the left-right direction of the lane 100 is possible. On this account, driving assist further in conformity with the driver's feeling of the motorcycle 1 with the width variation characteristic can be realized.

Based on a result of sensing by the front sensing unit 41, the preceding vehicle information calculation unit 54 is configured to detect at least one of the first inter-vehicle distance D1, the first offset distance P1, the width w1 of the preceding vehicle 102 in the vehicle left-right direction of the motorcycle 1 or the left-right direction of the lane 100, the position of the preceding vehicle 102 in the lane 100 in the left-right direction of the lane 100, the speed V2_{FB} of the preceding vehicle 102 in the vehicle front-rear direction of the motorcycle 1, the relative speed RV2_{FB} of the preceding vehicle 102 relative to the motorcycle 1 in the vehicle front-rear direction of the motorcycle 1, the acceleration A2_{FB} of the preceding vehicle 102 in the vehicle front-rear direction of the motorcycle 1, the relative acceleration RA2_{FB} of the preceding vehicle 102 relative to the motorcycle 1 in the vehicle front-rear direction of the motorcycle 1, the speed V2_{LR} of the preceding vehicle 102 in the vehicle left-right direction of the motorcycle 1, the relative speed RV2_{LR} of the preceding vehicle 102 in the vehicle left-right direction of the motorcycle 1, the acceleration A2_{LR} of the preceding vehicle 102 relative to the motorcycle 1 in the vehicle left-right direction of the motorcycle 1, or the relative acceleration RA2_{LR} of the preceding vehicle 102 relative to the motorcycle 1 in the vehicle left-right direction of the motorcycle 1. The active driving assist control unit 57 controls the active driving assist unit 23 to actively assist the driver based on the at least one set of information detected by the preceding vehicle information calculation unit 54 and the position of the motorcycle 1 in the lane 100 in the left-right direction of the lane 100. The active driving assist control unit 57 performs the driving assist control in consideration of not only the position of the motorcycle 1 in the lane 100 in the left-right direction of the lane 100 but also the running situation of the preceding vehicle 102. On this account, driving assist further in conformity with the driver's feeling of the motorcycle 1 with the width variation characteristic can be realized.

The IMU 40 is configured to detect the tilt angle θ1 or the tilt angular speed ω1 of the vehicle body frame 4 of the motorcycle 1. A width preferable for running varies in accordance with the degree of leaning of the vehicle body frame 4 of the motorcycle 1. The active driving assist control unit 57 controls the active driving assist unit 23 to actively assist the driver, based on at least one of the tilt angle θ1 or the tilt angular speed ω1 of the vehicle body frame 4 of the motorcycle 1 detected by the IMU 40 and further based on the position of the motorcycle 1 in the lane 100 in the left-right direction of the lane 100. On this account, driving assist further in conformity with the driver's feeling of the motorcycle 1 with the width variation characteristic can be realized.

The sensors 36 to 39 are configured to detect the speeds V1_{FB} and V1_{LR} and the accelerations A1_{FB} and A1_{LR} of the motorcycle 1. A width preferable for running may vary in accordance with the speed V1_{FB} or the acceleration A1_{FB} of the motorcycle 1 in the vehicle front-rear direction. Furthermore, a width preferable for running may vary in accordance with the speed V1_{LR} or the acceleration A1_{LR} of the motorcycle 1 in the vehicle left-right direction. The active driving assist control unit 57 controls the active driving assist unit 23 to actively assist the driver based on at least one of the speeds V1_{FB} and V1_{LR} or the accelerations A1_{FB} and A1_{LR} detected by the sensors 36 to 39 and further based on the position of the motorcycle 1 in the lane 100 in the left-right direction of the lane 100. On this account, driving assist further in conformity with the driver's feeling of the motorcycle 1 with the width variation characteristic can be realized.

The lane information calculation unit 56 or the wireless communication apparatus 42 is configured to detect the lane information related to the lane 100 in which the motorcycle 1 runs. The lane information includes, for example, information regarding curves, corners, intersections, junctions, traffic lights, and crossings. The intersections include T-junctions, Y-junctions, and crossroads. The information regarding a curve may include information regarding the position of the curve and the curvature of the curve. The lane information may include traffic restriction information such as speed limit and traffic jam information. A preferred running situation of the motorcycle 1 varies in accordance with the state of the lane 100. The active driving assist control unit 57 controls the active driving assist unit 23 to actively assist the driver, based on the lane information detected by the lane information calculation unit 56 or the wireless communication apparatus 42 and the position of the motorcycle 1 in the lane 100 in the left-right direction of the lane 100. On this account, driving assist further in conformity with the driver's feeling of the motorcycle 1 with the width variation characteristic can be realized.

The lane information calculation unit 56 or the wireless communication apparatus 42 is configured to detect information which is at least one of the width W of the lane 100 in the left-right direction of the lane 100, the direction of vehicle flow of the left lane 101L, or the direction of vehicle flow of the right lane 101R. A preferred distance between the edge of the lane 100 and the motorcycle 1 may vary in accordance with the width W of the lane 100. Furthermore, a preferred running position of the motorcycle 1 in the lane 100 may vary in accordance with the direction of vehicle flow of the neighboring lane 101. The active driving assist control unit 57 controls the active driving assist unit 23 to actively assist the driver, based on the width W1 of the lane 100 and/or the direction of vehicle flow of the neighboring lane 101 detected by the lane information calculation unit 56 or the wireless communication apparatus 42 and further based on the position of the motorcycle 1 in the lane 100 in the left-right direction of the lane 100. On this account, driving assist further in conformity with the driver's feeling of the motorcycle, 1 with the width variation characteristic can be realized.

The lane information calculation unit 56 or the wireless communication apparatus 42 is configured to detect a state change spot where the state of the lane 100 or the state of the outside of the lane 100 changes. The state change spot is, for example, a curve, a corner, an intersection, a junction, a branch, etc. When the motorcycle 1 runs at a state change spot or before the motorcycle 1 reaches the state change spot, a change of the travelling line of the motorcycle 1 or a change of the posture of the motorcycle 1 may be required. The active driving assist control unit 57 controls the active driving assist unit 23 to actively assist the driver based on the position of the motorcycle 1 in the lane 100 in the left-right direction of the lane 100, at a region including the state change spot detected by the lane information calculation unit 56 or the wireless communication apparatus 42. To put it differently, when the motorcycle 1 runs in a region where a change of the traveling line or the vehicle posture is required, driving assist control in accordance with the position of the motorcycle 1 in the lane 100 is possible. On this account, driving assist further in conformity with the driver's feeling of the motorcycle 1 with the width variation characteristic can be realized.

The lane information calculation unit 56 or the wireless communication apparatus 42 is configured to detect at least one of a curve, a corner, an intersection, a junction, or a branch of the lane 100. The curve, corner, intersection, junction, and branch are collectively termed a curve, etc. When the motorcycle 1 runs at a curve, etc. or before the motorcycle 1 reaches the curve, etc., a change of the traveling line of the motorcycle 1 or a change of the posture of the motorcycle 1 may be required. The active driving assist control unit 57 controls the active driving assist unit 23 to actively assist the driver, based on the information of the position of the motorcycle 1 in the lane 100 in the left-right direction of the lane 100, when the motorcycle 1 runs in a region including any of a curve, a corner, an intersection, a junction, and a branch of the lane 100 detected by the lane information calculation unit 56 or the wireless communication apparatus 42. On this account, when the motorcycle 1 runs in a region including a curve, etc., driving assist control in accordance with the position of the motorcycle 1 in the lane 100 can be done to achieve a preferred running situation. On this account, driving assist further in conformity with the driver's feeling of the motorcycle 1 with the width variation characteristic can be realized.

The active driving assist control unit 57 controls the active driving assist unit 23 so that the first inter-vehicle distance D1 is adjusted based on the first inter-vehicle distance D1 detected by the preceding vehicle information calculation unit 54 and the position of the motorcycle 1 in the lane 100 in the left-right direction of the lane 100. In other words, the first inter-vehicle distance D1 which is the inter-vehicle distance between the preceding vehicle 102 and the motorcycle 1 is adjustable based on the position of the motorcycle 1 in the lane 100 in the left-right direction of the lane 100. On this account, driving assist in conformity with the driver's feeling of the motorcycle 1 with the width variation characteristic can be realized.

A preferred embodiment of the present teaching has been described above. However, the present teaching is not limited to the above-described embodiment, and various changes can be made within the scope of the claims. Further, modifications described below may be used in combination as needed.

In the specific example of the embodiment above, a position of the motorcycle 1, based on which the positional relations between the motorcycle 1 and the fields 70F, 71F, and 72F are determined, is the front sensing unit 41 or the front wheel unit 2. The position in the motorcycle 1, based on which the positional relations between the motorcycle 1 and the fields 70F, 71F, and 72F are determined, may be different from this. The outer edge of the motorcycle 1 in plan view may be used as a basis. For example, whether a rectangle or an ellipse, which has the same width and total length as the motorcycle 1, enters a field is determined. The width of the motorcycle 1 in such a case may be the upright state width L0 or a width which varies in accordance with the tilt angle θ1 of the vehicle body frame 4. The width which varies in accordance with the tilt angle θ1 of the vehicle body frame 4 may be the width of only the motorcycle 1 (L0, L1v) or the width including the driver (L0, L1). When the width which varies in accordance with the tilt angle θ1 of the vehicle body frame 4 is employed, the width W70 of the edge field 70F on the inner side of a curve may be identical with the width W70 of the edge field 70F at a straight part, as shown in FIG. 12.

Instead of setting fields 71F and 72F to vehicles 102 and 103 which are not the motorcycle 1, a field may be set to the motorcycle 1. A condition for changing the size of this field is a combination of conditions for changing the sizes of the fields 71F and 72F. In this case, the active driving assist control unit 57 controls at least one of the acceleration controller 24 or the left-right movement assist device 25 so that the preceding vehicle 102 is in contact with the field of the motorcycle 1 and at the same time the neighboring lane vehicle 103 does not enter the field of the motorcycle 1. In addition, in the same manner as in the embodiment above, the motorcycle 1 is controlled not to enter the edge field 70F.

The preceding vehicle information calculation unit 54 may detect an inter-vehicle time T1 between the preceding vehicle 102 and the motorcycle 1 in the vehicle front-rear direction (FB direction). The inter-vehicle time T1 is a value calculated by converting the first inter-vehicle distance D1 between the preceding vehicle 102 and the motorcycle 1 in the vehicle front-rear direction (FB direction) to a time. The inter-vehicle time T1 in the vehicle front-rear direction (FB direction) is a time from a time point at which the preceding vehicle 102 passes a particular position to a time point at which the motorcycle 1 passes the same position. The particular position is not a point but a line extending along the vehicle left-right direction (LR direction). The inter-vehicle time T1 is, for example, calculated based on the first inter-vehicle distance D1 at a particular time point and temporal changes of the speed V1_{FB} of the motorcycle 1 and the relative speed RV2_{FB} of the preceding vehicle 102. The inter-vehicle time T1 may be an inter-vehicle time in the traveling direction of the motorcycle 1. Alternatively, the inter-vehicle time T1 may be an inter-vehicle time in the front-rear direction of the lane 100.

The active driving assist control unit 57 may perform the above-described driving assist control by using the inter-vehicle time T1 instead of the first inter-vehicle distance D1. For example, the active driving assist control unit 57 may control the active driving assist unit 23 based on the inter-vehicle time T1 so that the inter-vehicle time T1 is equal to or longer than a predetermined limit time. Alternatively, for example, the active driving assist control unit 57 may control the active driving assist unit 23 so that the jerk at the detection of leaning of the vehicle body frame 4 is changed based on the inter-vehicle time T1.

In the specific example of the embodiment above, the active driving assist control unit 57 controls the active driving assist unit 23 so that the first inter-vehicle distance D1 is maintained at a target inter-vehicle distance. Alternatively, the active driving assist control unit 57 may control the active driving assist unit 23 so that the first inter-vehicle distance D1 is equal to or longer than a predetermined limit distance.

The motorcycle 1 may not include any of the above-described sensors 30 to 41. The controller 50 does not have to include all of the above-described function processors 51 to 57.

The motorcycle 1 may include a sensor which is configured to detect the tilt angular acceleration α1 of the leaning of the vehicle body frame 4 in the vehicle left-right direction (LR direction). The controller 50 may calculate the tilt angular acceleration α1 based on the tilt angular speed ω1. The active driving assist control unit 57 may perform the driving assist control described in the specific example of the embodiment above, by using at least one of the tilt angle θ1, the tilt angular speed ω1, or the tilt angular acceleration α1.

In the specific example of the embodiment above, the leaning of the vehicle body frame 4 of the motorcycle 1 is detected by the IMU 40. Alternatively, the controller 50 detects the leaning of the vehicle body frame 4 of the motorcycle 1 based on a result of sensing by the front sensing unit 41. Furthermore, the controller 50 may detect at least one of the tilt angle θ1, the tilt angular speed ω1, or the tilt angular acceleration α1 of the vehicle body frame 4 of the motorcycle 1 based on a result of sensing by the front sensing unit 41. In this case, the front sensing unit 41 is encompassed in a leaning detection unit of the present teaching. Alternatively, the controller 50 may detect the leaning of the vehicle body frame 4 of the motorcycle 1 based on a GNSS signal which is received by the wireless communication apparatus 42 and map data which is either stored in the storage unit 49 or received by the wireless communication apparatus 42. In this case, the wireless communication apparatus 42, is encompassed in the leaning detection unit of the present teaching.

Instead of detecting the speed V1_{FB} of the motorcycle 1 in the vehicle front-rear direction (FB direction) and the speed V1_{LR} of the motorcycle 1 in the vehicle left-right direction (LR direction), only the speed V1 of the motorcycle 1 in the traveling direction may be detected. In place of the speeds V1_{FB} and V1_{LR}, the active driving assist control unit 57 performs the above-described driving assist control by using the speed V1. For example, the size of the field 71F is changed based on the speed V1. Furthermore, instead of detecting the acceleration A1_{FB} of the motorcycle 1 in the vehicle front-rear direction (FB direction) and the acceleration A1_{LR} of the motorcycle 1 in the vehicle left-right direction (LR direction), only the acceleration A1 of the motorcycle 1 in the traveling direction may be detected. In place of the accelerations A1_{FB} and A1_{LR}, the active driving assist control unit 57 performs the above-described driving assist control by using the acceleration A1. A preferable first inter-vehicle distance D1 may vary in accordance with the speed or acceleration of the motorcycle 1 in the traveling direction. According to the modification, the active driving assist unit 23 is controlled to actively assist the driver based on the speed V1 or the acceleration A1 of the motorcycle 1 in the traveling direction and the position of the motorcycle 1 in the lane 100 in the lane left-right direction (LLRL direction) detected by the in-lane left-right position calculation unit 52. Therefore driving assist further in conformity with the driver's feeling can be realized.

Instead of detecting the speed V2_{FB}, the relative speed RV2_{FR}, the acceleration A2_{FB}, and the relative acceleration RA2_{FB} of the preceding vehicle 102 in the vehicle front-rear direction (FB direction) of the motorcycle 1, the speed, relative speed, acceleration, and relative acceleration of the preceding vehicle 102 in the traveling direction of the motorcycle 1 or the preceding vehicle 102 may be detected. The active driving assist control unit 57 performs the above-described driving assist control by using these sets of information

Instead of detecting the speed V2_{LR}, the relative speed RV2_{LR}, the acceleration A2_{LR}, and the relative acceleration RA2_{LR} of the preceding vehicle 102 in the vehicle left-right direction (LR direction) of the motorcycle 1, the speed, relative speed, acceleration, and relative acceleration of the preceding vehicle 102 in a direction orthogonal to the traveling direction of the motorcycle 1 or the preceding vehicle 102 may be detected. The active driving assist control unit 57 performs the above-described driving assist control by using these sets of information

The preceding vehicle information calculation unit 54 may detect the relative speed RV2_{LR} or the relative acceleration RA2_{LR} of the preceding vehicle 102 relative to the motorcycle 1 in the vehicle left-right direction (LR direction) based on a result of sensing by the front sensing unit 41. The active driving assist control unit 57 may perform the above-described driving assist control based on the relative speed RV2_{LR} and/or the relative acceleration RA2_{LR}.

The motorcycle 1 may be configured so that the driver can input a position in the lane 100 in the lane left-right direction (LLRL direction), the position at which the motorcycle 1 being expected to run. For example, the position may be input by operating a switch on the handle unit 5 corresponding to a screen image of the display 14. The information of the input position is received by a receiver of the controller 50. In this case, the receiver of the controller 50 is encompassed in the in-lane left-right position information acquisition unit of the present teaching. In place of the position of the motorcycle 1 in the lane 100 detected by the in-lane left-right position calculation unit 52, the active driving assist control unit 57 performs the above-described driving assist control by using the positional information received by the receiver.

The wireless communication apparatus 42 may receive the width w1 of the preceding vehicle 102 in the lane left-right direction (LLRL direction). Information other than the width w1 used for the driving assist control may be received by the wireless communication apparatus 42.

The motorcycle 1 may include a sensor which is configured to detect the jerk of the motorcycle 1. The active driving assist control unit 57 may perform the above-described driving assist control by using the jerk of the motorcycle 1 detected by a jerk sensor. It is noted that the jerk of the motorcycle 1 is controllable even when no jerk sensor is provided.

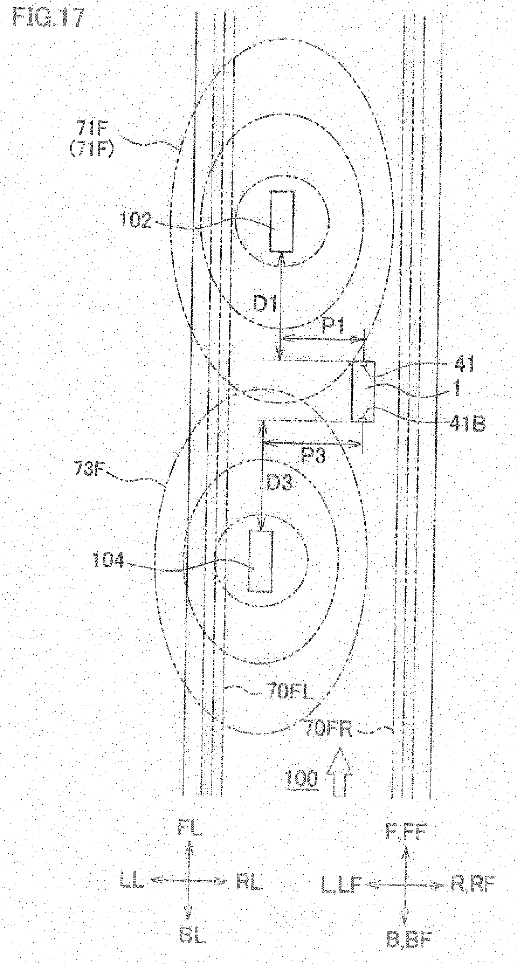

As shown in FIG. 17, the motorcycle 1 may include a rear sensing unit 41B which is configured to sense objects behind the motorcycle 1. The rear sensing unit 41B is included in the sensing unit of the present teaching. The rear sensing unit 41B is included in the sensing unit 21 shown in FIG. 1. Specific examples of devices constituting the rear sensing unit 41 B are identical with those of the front sensing unit 41. As shown in FIG. 17, in a lane 100, a vehicle running in a region rearward of (B direction) the motorcycle 1 will be referred to as a following vehicle 104. The following describes how the controller 50 works when the rear sensing unit 41B is provided.

The vehicle detection unit 53 of the controller 50 is configured to detect a following vehicle 104 based on a result of sensing by the rear sensing unit 41B. A following vehicle information calculation unit of the controller 50 is configured to detect a third inter-vehicle distance D3 which is the distance between the following vehicle 104 and the motorcycle 1 in the vehicle front-rear direction (FB direction), based on a result of sensing by the rear sensing unit 41B or the like. Furthermore, the following vehicle information calculation unit is configured to detect a third offset distance P3 which is the distance between the center of the motorcycle 1 and the center of the following vehicle 104 in the vehicle left-right direction (LR direction) of the motorcycle 1, based on a result of sensing by the rear sensing unit 41B or the like. The controller 50 includes the following vehicle information calculation unit which is configured to detect information such as the speed and width of the following vehicle 104. The active driving assist control unit 57 sets a field 73F which has the following vehicle 104 substantially as a center. Being similar to the field 71F and the field 72F, the size of the field 73F is changed based on different conditions. The active driving assist control unit 57 controls the active driving assist unit 23 so that the motorcycle 1 does not enter the field 73F of the following vehicle 104. The active driving assist control unit 57 may control the active driving assist unit 23 so that the motorcycle 1 is in contact with the field 73F of the following vehicle 104.

In the present teaching, methods of actively assisting the driver by controlling the active driving assist unit are not limited to those described in the specific example of the embodiment above. The active driving assist device of the present teaching may be any types of active driving assist devices on condition that the driver of a leaning vehicle is assisted. The active driving assist device of the present teaching may include so-called ADAS (Advanced Driver Assistant Systems). To be more specific, for example, the active driving assist device of the present teaching may include an anti-skid device (ESC: Electronic Stability Control). When information other than the information described in the present teaching is required depending on a type of driving assist, the active driving assist device of the present teaching obtains the required information and performs driving assist control.

In the specific example of the embodiment above, engine power is controlled by controlling an intake air amount by adjusting the opening degree of the throttle valve 18. Alternatively, the active driving assist control unit of the present teaching may control the engine power by controlling the intake air amount by adjusting the lift of the intake valve of the engine unit. Alternatively, the active driving assist control unit of the present teaching may control the engine power by controlling the intake air amount by adjusting the timings to open and close the intake valve of the engine unit. Alternatively, the active driving assist control unit of the present teaching may control the engine power by controlling a fuel injection amount.

The engine unit included in the active driving assist unit of the present teaching may or may not include a throttle valve. An example of an engine unit not including a throttle valve is a diesel engine. The diesel engine controls power solely by a fuel injection amount. Another example of an engine unit not including a throttle valve is an engine unit in which an intake air amount is controlled solely by the lift of an intake valve.

The leaning vehicle of the present teaching may be of any type on condition that the leaning vehicle includes a vehicle body frame which leans rightward of the vehicle when turning right and leans leftward of the vehicle when turning left. The leaning vehicle of the present teaching may be a straddled vehicle which is not a motorcycle. A straddled vehicle indicates all types of vehicles on which a rider rides in a manner of straddling a saddle. The leaning vehicle of the present teaching may not be a straddled vehicle. The leaning vehicle of the present teaching may be a tricycle or a four-wheeled vehicle. The leaning vehicle of the present teaching may include two or more front wheels. The leaning vehicle of the present teaching may include two or more rear wheels.

When there are two or more front wheels, the active driving assist control unit may move the leaning vehicle in the left-right direction by controlling the driving forces of both the left and right front wheels. When there are two or more rear wheels, the active driving assist control unit may move the leaning vehicle in the left-right direction by controlling the driving forces of both the left and right rear wheels.

Japanese Patent Application No. 2015-160460, which is a basic application of the subject application, will be referred to as a basic application 1.

The active driving assist device in this specification is equivalent to a driving assist device of the basic application 1. The speed-related information detection unit in this specification is equivalent to a speed/acceleration detection unit of the basic application 1. The in-lane left-right position information acquisition unit in this specification is equivalent to a left-right position detection/receiving unit of the basic application 1. The in-lane left-right position calculation unit 52 in this specification is equivalent to a left-right position calculation unit 51 of the basic application 1. The preceding vehicle information calculation unit 54 in this specification is equivalent to a preceding vehicle information acquisition unit 54 of the basic application 1. The neighboring lane vehicle information calculation unit 55 in this specification is equivalent to a neighboring lane vehicle information acquisition unit 55 of the basic application 1. The lane information calculation unit 56 in this specification is equivalent to a lane information acquisition unit 56 of the basic application 1. The active driving assist control unit 57 in this specification is equivalent to a lane information acquisition unit 57 of the basic application 1.

### [Reference Signs List]

1 leaning vehicle, motorcycle
2 front wheel unit
3 rear wheel unit
4 vehicle body frame
10 seat
20 active driving assist device
21 sensing unit
22 in-lane left-right position information acquisition unit
23 active driving assist unit
24 acceleration controller
25 left-right movement assist device
36 front-rear speed sensor (speed-related information detection unit)
37 front-rear acceleration sensor (speed-related information detection unit)
38 left-right speed sensor (speed-related information detection unit)
39 left-right acceleration sensor (speed-related information detection unit)
40 IMU (leaning detection unit)
41 front sensing unit
41B rear sensing unit
42 wireless communication apparatus
50 controller
52 in-lane left-right position calculation unit (in-lane left-right position information acquisition unit)
54 preceding vehicle information calculation unit
56 lane information calculation unit
57 active driving assist control unit
100 lane
101 (101L, 101R) neighboring lane
102 preceding vehicle
103 neighboring lane vehicle
104 following vehicle
D1 first inter-vehicle distance
D2 second inter-vehicle distance
D3 inter-vehicle distance
L0 upright state width
L1 lean state width
L1v leaning vehicle width
P1 first offset distance
P2 second offset distance
P3 third offset distance
w1 width of preceding vehicle
w2 width of neighboring lane vehicle
W width of lane

## Claims

1. A leaning vehicle comprising:
a vehicle body frame which leans rightward in a vehicle left-right direction when turning right and leans leftward in the vehicle left-right direction when turning left;
a seat supported by the vehicle body frame;
a front wheel unit, which includes at least one front wheel, is supported by the vehicle body frame, and is provided at least partially forward of the seat in a vehicle front-rear direction; and
a rear wheel unit, which includes at least one rear wheel, is supported by the vehicle body frame, and is provided at least partially rearward of the seat in the vehicle front-rear direction,
the leaning vehicle having a width variation characteristic with which, in a left-right direction of a lane in which the leaning vehicle runs, a lean state width which encompasses the leaning vehicle and a driver when the vehicle body frame leans is longer than an upright state width which encompasses the leaning vehicle and the driver when the vehicle body frame is upright, and
the leaning vehicle further comprising an active driving assist device which includes:
an active driving assist unit capable of actively assisting the driver of the leaning vehicle having the width variation characteristic;
a sensing unit configured to sense an object in front of, behind, or both in the vehicle front-rear direction of the leaning vehicle;
an in-lane left-right position information acquisition unit configured to acquire information of a position of the leaning vehicle in the lane in the left-right direction of the lane; and
an active driving assist control unit which is configured to control the active driving assist unit so as to actively assist the driver of the leaning vehicle with the width variation characteristic in accordance with a result of sensing by the sensing unit and the information of the position of the leaning vehicle in the lane in the left-right direction of the lane, the information of the position being obtained by the in-lane left-right position information acquisition unit.

2. The leaning vehicle according to claim 1, wherein the sensing unit includes a front sensing unit configured to sense an object in front of the leaning vehicle in the vehicle front-rear direction, and
the active driving assist control unit is configured to control the active driving assist unit so as to actively assist the driver of the leaning vehicle with the width variation characteristic, in accordance with the information of the position of the leaning vehicle in the lane in the left-right direction of the lane, the information of the position being acquired by the in-lane left-right position information acquisition unit, when a preceding vehicle which runs in a region forward of the leaning vehicle in the vehicle front-rear direction is detected in the lane in which the leaning vehicle runs based on a result of sensing by the front sensing unit.

3. The leaning vehicle according to claim 2, wherein the active driving assist device includes a preceding vehicle information detection unit which is configured to detect at least one of sets of information based on a result of sensing by the front sensing unit, the sets of information being:
a first inter-vehicle distance between the preceding vehicle and the leaning vehicle in the vehicle front-rear direction of the leaning vehicle or the front-rear direction of the lane;
a distance between the center of the leaning vehicle and the center of the preceding vehicle in the vehicle left-right direction of the leaning vehicle or the left-right direction of the lane;
a width of the preceding vehicle in the vehicle left-right direction of the leaning vehicle or the left-right direction of the lane;
a position of the preceding vehicle in the lane in the left-right direction of the lane;
a speed of the preceding vehicle in the vehicle front-rear direction of the leaning vehicle or a traveling direction of the leaning vehicle;
a relative speed of the preceding vehicle relative to the leaning vehicle in the vehicle front-rear direction of the leaning vehicle or the traveling direction of the leaning vehicle;
an acceleration of the preceding vehicle in the vehicle front-rear direction of the leaning vehicle or a traveling direction of the leaning vehicle;
a relative acceleration of the preceding vehicle relative to the leaning vehicle in the vehicle front-rear direction of the leaning vehicle or the traveling direction of the leaning vehicle;
a speed of the preceding vehicle in the vehicle left-right direction of the leaning vehicle or a direction orthogonal to the traveling direction of the leaning vehicle;
a relative speed of the preceding vehicle relative to the leaning vehicle in the vehicle left-right direction of the leaning vehicle or the direction orthogonal to the traveling direction of the leaning vehicle;
an acceleration of the preceding vehicle in the vehicle left-right direction of the leaning vehicle or the direction orthogonal to the traveling direction of the leaning vehicle; and
a relative acceleration of the preceding vehicle relative to the leaning vehicle in the vehicle left-right direction of the leaning vehicle or the direction orthogonal to the traveling direction of the leaning vehicle, and
the active driving assist control unit is configured to control the active driving assist unit so as to actively assist the driver of the leaning vehicle with the width variation characteristic, based on the at least one set of information detected by the preceding vehicle information detection unit and the information of the position of the leaning vehicle in the lane in the left-right direction of the lane, the information of the position being detected by the in-lane left-right position information acquisition unit.

4. The leaning vehicle according to any one of claims 1 to 3, wherein the active driving assist device includes a leaning detection unit which is configured to detect at least one of sets of information, the sets of information being a tilt angle, an tilt angular speed, and an tilt angular acceleration of leaning of the vehicle body frame in the vehicle left-right direction, and
the active driving assist control unit is configured to control the active driving assist unit so as to actively assist the driver of the leaning vehicle with the width variation characteristic, based on the at least one set of information detected by the leaning detection unit and further based on the information of the position of the leaning vehicle in the lane in the left-right direction of the lane, the information of the position being acquired by the in-lane left-right position information acquisition unit.

5. The leaning vehicle according to any one of claims 1 to 4, wherein the active driving assist device includes a speed-related information detection unit which is configured to detect at least one of sets of information, the sets of information being:
a speed of the leaning vehicle in the traveling direction;
an acceleration of the leaning vehicle in the traveling direction;
a speed of the leaning vehicle in the vehicle front-rear direction;
an acceleration of the leaning vehicle in the vehicle front-rear direction;
a speed of the leaning vehicle in the vehicle left-right direction; and
an acceleration of the leaning vehicle in the vehicle left-right direction, and
the active driving assist control unit is configured to control the active driving assist unit so as to actively assist the driver of the leaning vehicle with the width variation characteristic, based on the at least one set of information detected by the speed-related information detection unit and the information of the position of the leaning vehicle in the lane in the left-right direction of the lane, the information of the position being detected by the in-lane left-right position information acquisition unit.

6. The leaning vehicle according to any one of claims 1 to 5, wherein the active driving assist device includes a lane information detection unit configured to detect lane information related to the lane, and
the active driving assist control unit is configured to control the active driving assist unit so as to actively assist the driver of the leaning vehicle with the width variation characteristic, based on the lane information detected by the lane information detection unit and the information of the position of the leaning vehicle in the lane in the left-right direction of the lane, the information of the position being detected by the in-lane left-right position information acquisition unit.

7. The leaning vehicle according to claim 6, wherein the lane information detection unit detects at least one of sets of information, the sets of information being:
a width of the lane in the left-right direction of the lane or the vehicle left-right direction of the leaning vehicle;
a direction of vehicle flow of a lane which is to the left of the lane in which the leaning vehicle runs; and
a direction of vehicle flow of a lane which is to the right of the lane in which the leaning vehicle runs, and
the active driving assist control unit is configured to control the active driving assist unit so as to actively assist the driver of the leaning vehicle with the width variation characteristic, based on the at least one set of information detected by the lane information detection unit and the information of the position of the leaning vehicle in the lane in the left-right direction of the lane, the information of the position being detected by the in-lane left-right position information acquisition unit.

8. The leaning vehicle according to any one of claims 1 to 7, wherein
the lane information detection unit detects a state change spot where a state of the lane or a state outside of the lane changes, and
in a region including the state change spot detected by the lane information detection unit, the active driving assist control unit is configured to control the active driving assist unit so as to actively assist the driver of the leaning vehicle with the width variation characteristic, based on the information of the position of the leaning vehicle in the lane in the left-right direction of the lane, the information of the position being detected by the in-lane left-right position information acquisition unit.

9. The leaning vehicle according to any one of claims 1 to 8, wherein the lane information detection unit detects at least one of a curve, a corner, an intersection, a junction, or a branch of the lane in which the leaning vehicle runs, and
when the leaning vehicle runs in a region including any of the curve, corner, intersection, junction, or branch of the lane detected by the lane information detection unit,
the active driving assist control unit is configured to control the active driving assist unit so as to actively assist the driver of the leaning vehicle with the width variation characteristic, based on the information of the position of the leaning vehicle in the lane in the left-right direction of the lane, the information of the position being detected by the in-lane left-right position information acquisition unit.

10. The leaning vehicle according to claim 3, wherein the active driving assist control unit is configured to control the active driving assist unit to adjust the first inter-vehicle distance based on the first inter-vehicle distance detected by the preceding vehicle information detection unit and the position of the leaning vehicle in the lane in the left-right direction of the lane acquired by the in-lane left-right position information acquisition unit.

11. The leaning vehicle according to any one of claims 1 to 10 wherein, the upright state width of the leaning vehicle is equal to or shorter than the half of the width of the lane in the left-right direction of the lance.
